(19) Europäisches Patentamt
European Patent Office
Office européen des brevets

(11) EP 2 937 374 B1

(12) # EUROPEAN PATENT SPECIFICATION

(45) Date of publication and mention of the grant of the patent:
**27.06.2018 Bulletin 2018/26**

(21) Application number: **13865240.9**

(22) Date of filing: **05.12.2013**

(51) Int Cl.:
***C08G 65/40*** *(2006.01)* ***C08L 71/10*** *(2006.01)*
***C08G 65/48*** *(2006.01)*

(86) International application number:
**PCT/JP2013/007158**

(87) International publication number:
**WO 2014/097564 (26.06.2014 Gazette 2014/26)**

(54) **METHOD FOR PRODUCING CYCLIC POLYPHENYLENE ETHER ETHER KETONE COMPOSITION AND LINEAR POLYPHENYLENE ETHER ETHER KETONE, AND METHOD FOR PRODUCING POLYPHENYLENE ETHER ETHER KETONE**

VERFAHREN ZUR HERSTELLUNG EINER CYCLISCHEN POLYPHENYLENETHERETHERKETON-ZUSAMMENSETZUNG UND VON LINEAREM POLYPHENYLENETHERETHERKETON SOWIE VERFAHREN ZUR HERSTELLUNG VON POLYPHENYLENETHERETHERKETON

PROCÉDÉ DE PRODUCTION D’UNE COMPOSITION DE POLYPHÉNYLÈNE-ÉTHERÉTHERCÉTONE CYCLIQUE ET DE POLYPHÉNYLÈNE-ÉTHERÉTHERCÉTONE LINÉAIRE, ET PROCÉDÉ DE PRODUCTION DE POLYPHÉNYLÈNE-ÉTHERÉTHERCÉTONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2012 JP 2012279217**

(43) Date of publication of application:
**28.10.2015 Bulletin 2015/44**

(73) Proprietor: **Toray Industries, Inc.**
**Tokyo, 103-8666 (JP)**

(72) Inventors:
- **YAMASHITA, Kohei**
**Nagoya-shi**
**Aichi 455-8502 (JP)**
- **YOKOE, Makito**
**Nagoya-shi**
**Aichi 455-8502 (JP)**
- **YAMAUCHI, Koji**
**Nagoya-shi**
**Aichi 455-8502 (JP)**

(74) Representative: **Webster, Jeremy Mark et al**
**Mewburn Ellis LLP**
**City Tower**
**40 Basinghall Street**
**London EC2V 5DE (GB)**

(56) References cited:
**EP-A1- 2 508 518**
**WO-A1-2011/081080**
**WO-A1-2012/117840**
**JP-A- 2009 227 961**
**JP-A- 2012 207 213**
**JP-A- 2012 229 177**
**JP-A- 2012 236 981**
**JP-A- 2012 506 474**
**JP-A- 2013 028 598**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

CROSS-REFERENCE TO RELATED APPLICATIONS

The present application claims priority from Japanese Patent Application No. 2012-279217 filed on December 21, 2012.

Technical Field

The invention relates to a production method of a cyclic poly(phenylene ether ether ketone) composition and a linear poly(phenylene ether ether ketone).

Background Art

Cyclic aromatic compounds have recently received attention, because of their structure-derived specificities. The specificities include potential for development in applications of high-performance materials and functional materials, for example, characteristics as inclusion compounds or usability as monomers effective for syntheses of high molecular-weight linear polymers by ring-opening polymerization. Cyclic poly(phenylene ether ether ketone) is a remarkable compound belonging to the category of cyclic aromatic compounds.

A method employed for synthesis of cyclic poly(phenylene ether ether ketone) may be, for example, a method by reaction of a linear poly(phenylene ether ether ketone) oligomer having hydroxyl groups at both ends and a linear poly(phenylene ether ether ketone) oligomer having fluoride groups at both ends as shown by a formula given below (see, for example, Non-Patent Document 1).

[Chem. 1]

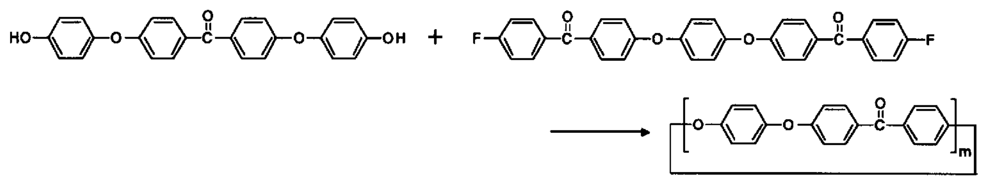

m = 3 or 6

EP 2508518 A1 concerns a cyclic poly (phenylene ether ether ketone) composition comprising not less than 60% by weight of a cyclic poly (phenylene ether ether ketone) represented by the Formula (I), which is characterized in that the cyclic poly (phenylene ether ether ketone) is a mixture of cyclic poly (phenylene ether ether ketone)s having different repeating numbers (m) and the composition has a melting point of not higher than 270 °C; and a method of producing a poly (phenylene ether ether ketone) characterized by heat-polymerizing the cyclic poly (phenylene ether ether ketone) composition: (wherein, m represents an integer of 2 to 40). JP 2012-207213 A concerns a method for recovering a cyclic polyphenylene ether ether ketone composition, wherein the high-purity cyclic polyphenylene ether ether ketone composition is obtained only by subjecting a mixture including at least a polyphenylene ether ether ketone, a cyclic polyphenylene ether ether ketone, and an organic polar solvent to solid-liquid separation within a temperature range in which the polyphenylene ether ether ketone becomes insoluble, and removing the organic polar solvent from the obtained filtrate. JP 2012-236981 A concerns a method of recovering a cyclic polyphenylene ether etherketone composition characterized in that the cyclic polyphenylene ether etherketone composition of high purity can be obtained by only passing through a process which evaporates an organic polar solvent, and a process which performs solid-liquid separation at a temperature range where polyphenylene ether etherketone becomes insoluble.

Prior Art Documents

Patent Documents:

Patent Document 1: Chinese Patent No. 101519399

Non-Patent Documents

Non-Patent Document 1: Macromolecules 1996, 29, 5502
Non-Patent Document 2: Macromol. Chem. Phys. 1996, 197, 4069
Non-Patent Document 3: Polymer Bulletin 1999, 42, 245

Summary of the Invention

Problems to be Solved by the Invention

This method, however, uses the oligomers of long chain lengths as the raw materials, so that a cyclic poly(phenylene ether ether ketone) mixture obtained includes cyclic poly(phenylene ether ether ketone)s having repeating numbers m= 3 and/or 6. Accordingly, this method provides only a cyclic poly(phenylene ether ether ketone) having a melting point of higher than 270°C. More specifically, the cyclic poly(phenylene ether ether ketone) obtained from the linear oligomers shown by the above formula (oligomer having hydroxyl groups at both ends and consisting of four units of benzene ring component and oligomer having fluoride groups at both ends and consisting of five units of benzene ring component) consists of only a cyclic trimer (m= 3) and a cyclic hexamer (m= 6). In Non-Patent Document 1, it is described that the cyclic trimer (m=3) and the cyclic hexamer (m=6) are cyclic poly(phenylene ether ether ketone)s respectively having a melting point of 366°C and a melting point of 324°C.

There is another production method of cyclic poly(phenylene ether ether ketone) by reaction of a linear poly(phenylene ether ether ketone) oligomer having hydroxyl groups at both ends and 4,4'-difluorobenzophenone as shown by a formula given below (see, for example, Non-Patent Document 2).

[Chem. 2]

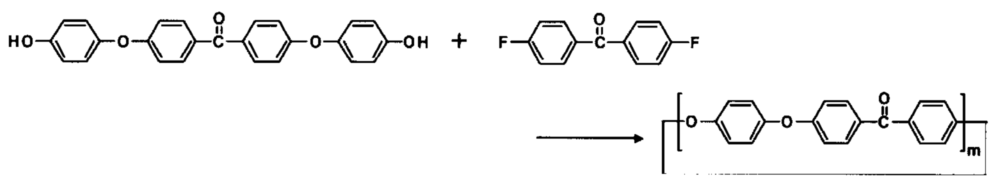

m = 2

It is described in Non-Patent Document 2 that the cyclic poly(phenylene ether ether ketone) obtained by this method is a mononuclear cyclic dimer (m= 2) and has a melting point of not lower than 440°C. Using the linear poly(phenylene ether ether ketone) oligomer used as the raw material for synthesis of cyclic poly(phenylene ether ether ketone) is a significant method for the purpose of obtaining high purity cyclic poly(phenylene ether ether ketone) of a desired reheating number. This method, however, has difficulty in producing a cyclic poly(phenylene ether ether ketone) composition that is a mixture of different repeating numbers m and has a melting point of not higher than 270°C.

In synthesis of cyclic poly(phenylene ether ether ketone) described in Non-Patent Document 1 and Non-Patent Document 2, reaction is performed under the pseudo high dilute condition. These synthesis methods provide the high selectivity for production of cyclic poly(phenylene ether ether ketone) but need to maintain the ultra high-dilute condition. Accordingly, these synthesis methods require an extremely long time for reaction and additionally need a process of separately preparing the oligomer with hydroxyl groups at both ends and the oligomer with fluoride groups at both ends used as the raw materials for synthesis of cyclic poly(phenylene ether ether ketone). The synthesis methods described in Non-Patent Document 1 and Non-Patent Document 2 are thus not regarded as the industrially usable method for production of cyclic poly(phenylene ether ether ketone).

Another method uses an aromatic imine compound as the raw material for production of cyclic poly(phenylene ether ether ketone) (see, for example, Non-Patent Document 3). The method of Non-Patent Document 3 prepares cyclic poly(phenylene ether ether ketimine) from N-phenyl-(4,4'-difluorodiphenyl)ketimine and hydroquinone and obtains cyclic poly(phenylene ether ether ketone) by hydrolysis of the cyclic poly(phenylene ether ether ketimine) under an acidic condition as shown by the following formula.

[Chem. 3]

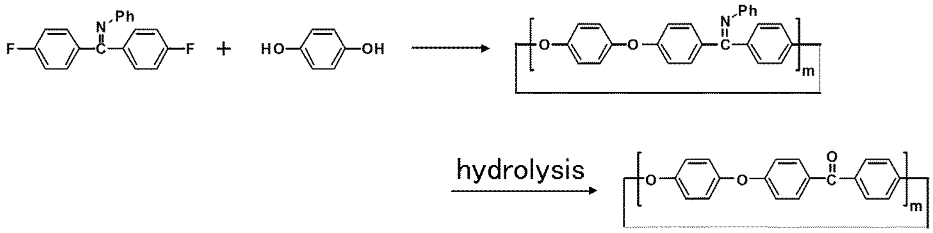


In general, an aromatic ketimine compound has the lower reactivity than a corresponding aromatic ketone compound. Additionally, in the method of Non-Patent Document 3, the reaction is performed under the ultra high-dilute condition. A low molecular-weight linear oligomer that is not readily separable from cyclic poly(phenylene ether ether ketimine) thus remains after completion of the synthesis reaction of the cyclic poly(phenylene ether ether ketimine). The cyclic poly(phenylene ether ether ketone) produced by this method accordingly includes a large amount of impurity and has low purity. Moreover, production of cyclic poly(phenylene ether ether ketone) by this method requires at least (i) step of preparing an aromatic ketimine compound as the raw material, (ii) step of preparing and purifying cyclic poly(phenylene ether ether ketimine), and (iii) step of preparing and purifying cyclic poly(phenylene ether ether ketone) by hydrolysis of the recovered cyclic poly(phenylene ether ether ketimine). In other words, this method requires the complicated, multi-step reaction and is thus not regarded as the industrially usable method for production of cyclic poly(phenylene ether ether ketone).

Furthermore, Non-Patent Document 3 does not describe the melting point of cyclic poly(phenylene ether ether ketone). The cyclic poly(phenylene ether ether ketone) produced by the method of Non-Patent Document 3, however, contains a high proportion of linear poly(phenylene ether ether ketone) having a high melting point as the impurity. Accordingly, the cyclic poly(phenylene ether ether ketone) produced by this method is expected to have a high melting point.

Another disclosed production method of cyclic poly(phenylene ether ether ketone) uses a phenylene ether oligomer as the raw material (see, for example, Patent Document 1).

[Chem. 4]

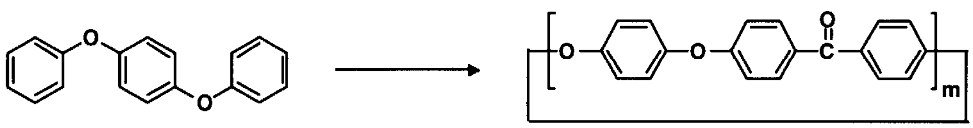

The method of Patent Document 1 enables a cyclic polyether ketone to be produced by one-step reaction of 1,4-diphenoxybenzene in the presence of a Lewis acid. Synthesis methods of polyphenylene ether ketone compounds are broadly classified into two types: synthesis based on ether linkage by an aromatic nucleophilic substitution and synthesis based on ketone linkage by an aromatic electrophilic substitution. The synthesis route of cyclic polyphenylene ether ketone of Patent Document 1 is included in the latter type. One of the problems in synthesis of polyphenylene ether ketone by the aromatic electrophilic substitution is the low regioselectivity of the reaction. Accordingly, the cyclic polyphenylene ether ketone obtained by the method of Patent Document 1 is supposed to be a low purity cyclic polyphenylene ether ketone including ortho form and metal form other than para form as the objective compound. Furthermore, Patent Document 1 does not describe the melting point of the obtained cyclic polyphenylene ether ketone.

In order to solve at least one of the problems described above, an object of the invention is to provide a production method of a cyclic poly(phenylene ether ether ketone) composition and a linear poly(phenylene ether ether ketone).

Means for Solving the Problems

In order to solve the problems described above, the invention may be implemented by the following aspects.

1. A production method of a cyclic poly(phenylene ether ether ketone) composition and a linear poly(phenylene ether ether ketone) by a reaction by heating at least a linear poly(phenylene ether ether ketone), a dihalogenated aromatic ketone compound, a dihydroxy aromatic compound and a base in an organic polar solvent,

the production method using

(i) the organic polar solvent of not less than 1.20 liters and not more than 100 liters relative to 1.0 mol of a benzene ring component in a reaction mixture, and
(ii) as the base, a base mixture of at least one species selected between sodium carbonate and sodium bicarbonate and at least one species selected among carbonates and bicarbonates of alkali metals having higher atomic numbers than sodium.

2. The production method of the cyclic poly(phenylene ether ether ketone) composition and the linear poly(phenylene ether ether ketone) according to 1,
in production of the cyclic poly(phenylene ether ether ketone) composition and the linear poly(phenylene ether ether ketone) by the reaction by heating at least the linear poly(phenylene ether ether ketone), the dihalogenated aromatic ketone compound, the dihydroxy aromatic compound and the base in the organic polar solvent,
the production method comprising:

performing a reaction (A) by heating a mixture that includes at least the linear poly(phenylene ether ether ketone), the dihydroxy aromatic compound, the base and the organic polar solvent; and
performing a reaction (B) by adding the dihalogenated aromatic ketone compound to a reaction mixture obtained by the reaction (A) such as to be 1.0 to 1.5 mol relative to 1 mol of the dihydroxy aromatic compound used in the reaction (A).

3. The production method of the cyclic poly(phenylene ether ether ketone) composition and the linear poly(phenylene ether ether ketone) according to either 1 or 2,
wherein the cyclic poly(phenylene ether ether ketone) composition obtained by the reaction is a composition including 60% by weight or more of cyclic poly(phenylene ether ether ketone) that is expressed by a general formula (I) and is a mixture of cyclic poly(phenylene ether ether ketone)s having different repeating numbers, and
the cyclic poly(phenylene ether ether ketone) composition has a melting point of not higher than 270°C,

[Chem. 5]

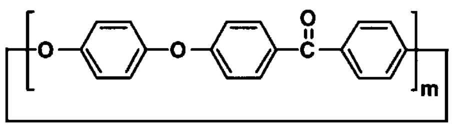

(I)

(where m in the formula (I) is an integral number of 2 to 40).
4. The production method of the cyclic poly(phenylene ether ether ketone) composition and the linear poly(phenylene ether ether ketone) according to 3,
wherein m is at least three or more different integral numbers.
5. The production method of the cyclic poly(phenylene ether ether ketone) composition and the linear poly(phenylene ether ether ketone) according to either 3 or 4,
wherein m is at least three or more consecutive integral numbers.
6. The production method of the cyclic poly(phenylene ether ether ketone) composition and the linear poly(phenylene ether ether ketone) according to any one of 1 to 5,
wherein the linear poly(phenylene ether ether ketone) used for the reaction is a linear poly(phenylene ether ether ketone) obtained by exposing the dihalogenated aromatic ketone compound, the dihydroxy aromatic compound and the base to the organic polar solvent.
7. The production method of the cyclic poly(phenylene ether ether ketone) composition and the linear poly(phenylene ether ether ketone) according to any one of 1 to 5,
wherein the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by a reaction by heating a mixture including at least the dihalogenated aromatic ketone compound, the dihydroxy aromatic compound, the base and the organic polar solvent and having an amount of the organic polar solvent of not less than 1.20 liters and not more than 100 liters relative to 1.0 mol of the benzene ring component in the mixture.
8. The production method of the cyclic poly(phenylene ether ether ketone) composition and the linear poly(phenylene ether ether ketone)

ether ether ketone) according to any one of 1 to 5,
wherein the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by a reaction by heating a mixture including at least the linear poly(phenylene ether ether ketone), the dihalogenated aromatic ketone compound, the dihydroxy aromatic compound, the base and the organic polar solvent and having an amount of the organic polar solvent of not less than 1.20 liters and not more than 100 liters relative to 1.0 mol of the benzene ring component in the mixture.
9. The production method of the cyclic poly(phenylene ether ether ketone) composition and the linear poly(phenylene ether ether ketone) according to any one of 1 to 5,
with regard to the reaction by heating at least the linear poly(phenylene ether ether ketone), the dihalogenated aromatic ketone compound, the dihydroxy aromatic compound and the base in the organic polar solvent,
the production method comprising:

performing a reaction (A) by heating a mixture that includes at least the linear poly(phenylene ether ether ketone), the dihydroxy aromatic compound, the base and the organic polar solvent; and
performing a reaction (B) by adding the dihalogenated aromatic ketone compound to a reaction mixture obtained by the reaction (A) such as to be 1.0 to 1.5 mol relative to 1 mol of the dihydroxy aromatic compound used in the reaction (A), wherein
the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by the reaction (B).

10. A production method of a cyclic poly(phenylene ether ether ketone) composition and a linear poly(phenylene ether ether ketone), comprising the steps of:

(1) performing the production method according to any one of 1 to 5;
(2) separating a cyclic poly(phenylene ether ether ketone) composition from the cyclic poly(phenylene ether ether ketone) composition and a linear poly(phenylene ether ether ketone) obtained in the step (1);
(3) performing the step (1) using the linear poly(phenylene ether ether ketone) after separation of the cyclic poly(phenylene ether ether ketone) composition in the step (2);
(4) separating a cyclic poly(phenylene ether ether ketone) composition from the cyclic poly(phenylene ether ether ketone) composition and a linear poly(phenylene ether ether ketone) obtained in the step (3); and
(5) repeating the step (3) and the step (4).

11. A production method of poly(phenylene ether ether ketone), the production method comprising:
producing the poly(phenylene ether ether ketone) by thermal ring-opening polymerization of the cyclic poly(phenylene ether ether ketone) composition obtained by the production method according to any one of 1 to 10.

Advantageous Effects of Invention

According to the invention, there is provided an economical and simple method of producing a high-purity cyclic poly(phenylene ether ether ketone) composition and a linear poly(phenylene ether ether ketone) with high efficiency.
Especially using, as a base, a base mixture of at least one species selected between sodium carbonate and sodium bicarbonate and at least one species selected among carbonates and bicarbonates of alkali metals having higher atomic numbers than sodium has the effect of suppressing generation of an impurity structure such as "ether ketone" that is different from "ether ether ketone" and is included in an obtained linear poly(phenylene ether ether ketone).
Furthermore, the production method performs a reaction (A) by heating a mixture that includes at least a linear poly(phenylene ether ether ketone), a dihydroxy aromatic compound, a base and an organic polar solvent, and performing a reaction (B) by adding a dihalogenated aromatic ketone compound to a reaction mixture obtained by the reaction (A) such as to be 1.0 to 1.5 mol relative to 1 mol of the dihydroxy aromatic compound used in the reaction (A). This enhances the yield.

Mode for Carrying Out the Invention

The following describes the invention in detail.

(1) Cyclic Poly(Phenylene Ether Ether Ketone) Composition

The cyclic poly(phenylene ether ether ketone) according to an embodiment of the invention is a cyclic compound that includes para-phenylene ketone and para-phenylene ether as repeating structural units and is expressed by a general formula (I) given below:

[Chem. 6]

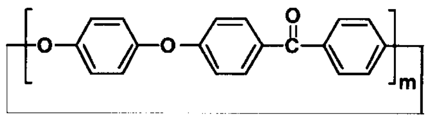

(I)

The repeating number m in Formula (I) is an integral number and may be in a range of 2 to 40, preferably in a range of 2 to 30, more preferably in a range of 2 to 15 and furthermore preferably in a range of 2 to 10. An increase in repeating number m is likely to increase the melting point of the cyclic poly(phenylene ether ether ketone). Accordingly, it is preferable to control the repeating number m to the above range, in terms of melting the cyclic poly(phenylene ether ether ketone) at low temperature.

The cyclic poly(phenylene ether ether ketone) expressed by Formula (I) is preferably a mixture having different repeating numbers m, is more preferably a cyclic poly(phenylene ether ether ketone) mixture having at least three or more different repeating umbers m, is furthermore preferably a mixture having four or more different repeating numbers m and is especially preferably a mixture having five or more different repeating numbers m. Moreover, especially preferable is a mixture having consecutive repeating numbers m.

Compared with a single compound having a single repeating number m, a mixture having different repeating numbers m is likely to have the lower melting point. Compared with a cyclic poly(phenylene ether ether ketone) mixture having two different repeating numbers m, a mixture having three or more different repeating numbers m is likely to have the further lower melting point. Compared with a mixture having discrete repeating numbers m, a mixture having consecutive repeating numbers m is likely to have the further lower melting point.

The cyclic poly(phenylene ether ether ketones) having different repeating numbers m may be subjected to component separation analysis by high-performance liquid chromatography. The composition of the cyclic poly(phenylene ether ether ketone) or more specifically the weight fractions of the cyclic poly(phenylene ether ether ketones) having different repeating numbers m included in the cyclic poly(phenylene ether ether ketone) mixture may be calculated from the peak area ratios of the respective cyclic poly(phenylene ether ether ketones) in high-performance liquid chromatography.

Furthermore, the cyclic poly(phenylene ether ether ketone) composition according to the embodiment of the invention has a melting point of not higher than 270°C, which is significantly lower than the melting point of a linear poly(phenylene ether ether ketone) substantially equivalent to the cyclic poly(phenylene ether ether ketone) composition according to the embodiment of the invention. The cyclic poly(phenylene ether ether ketone) composition according to the embodiment of the invention preferably has a melting point of not higher than 250°C and more preferably has a melting point of not higher than 230°C. The lower melting point of the cyclic poly(phenylene ether ether ketone) composition leads to the lower processing temperature. As a result, this decreases the processing temperature required for obtaining a high polymer using the cyclic poly(phenylene ether ether ketone) composition as a poly(phenylene ether ether ketone) prepolymer and thereby advantageously reduces the energy required for processing. The melting point of the cyclic poly(phenylene ether ether ketone) composition may be determined by measurement of an endothermic peak temperature using a differential scanning calorimeter.

The cyclic poly(phenylene ether ether ketone) composition according to the embodiment of the invention is a cyclic poly(phenylene ether ether ketone) composition including 60% by weight or more of the cyclic poly(phenylene ether ether ketone). A composition including 65% by weight or more of the cyclic poly(phenylene ether ether ketone) is more preferable; a composition including 70% by weight or more of the cyclic poly(phenylene ether ether ketone) is furthermore preferable; and a composition including 75% by weight or more of the cyclic poly(phenylene ether ether ketone) is especially preferable. The primary impurity component of the cyclic poly(phenylene ether ether ketone) composition, i.e., the component other than the cyclic poly(phenylene ether ether ketone) is linear poly(phenylene ether ether ketone). This linear poly(phenylene ether ether ketone) has a high melting point, so that the higher weight fraction of the linear poly(phenylene ether ether ketone) is likely to provide a cyclic poly(phenylene ether ether ketone) composition having the higher melting point. In other words, controlling the weight fraction of the cyclic poly(phenylene ether ether ketone) in the cyclic poly(phenylene ether ether ketone) composition to the above range is likely to provide a cyclic poly(phenylene ether ether ketone) composition having a low melting point. Moreover, it is preferable to control the

weight fraction of the cyclic poly(phenylene ether ether ketone) in the cyclic poly(phenylene ether ether ketone) composition to the above range, in order to obtain a high polymerization degree of poly(phenylene ether ether ketone) using the cyclic poly(phenylene ether ether ketone) composition as the poly(phenylene ether ether ketone) prepolymer.

The reduced viscosity (η) of the cyclic poly(phenylene ether ether ketone) composition according to the embodiment of the invention having the characteristics described above is, for example, preferably not higher than 0.1 dL/g, is more preferably not higher than 0.09 dL/g and is furthermore preferably not higher than 0.08 dL/g. Unless otherwise specified, the reduced viscosity according to the embodiment of the invention indicates a value measured by using an Ostwald viscosimeter at 25°C immediately after completion of dissolution in a concentrated sulfuric acid solution having a concentration of 0.1 g/dL (weight of cyclic poly(phenylene ether ether ketone) composition or linear poly(phenylene ether ether ketone)/ volume of 98% by weight concentrated sulfuric acid) in order to minimize the effect of sulfonation.

The calculation of the reduced viscosity follows an equation given below:

$$\eta = \{(t/t0) - 1\}/ C$$

(in the above equation, t represents the transit time of the sample solution in seconds ; t0 represents the transit time of the solvent (98% by weight concentrated sulfuric acid) in seconds; and C represents the concentration of the solution).

(2) Linear Poly(Phenylene Ether Ether Ketone)

The linear poly(phenylene ether ether ketone) according to the embodiment of the invention is a linear compound that has para-phenylene ketone and para-phenylene ether as repeating structural units and is expressed by a general formula (II) given below:

[Chem. 7]

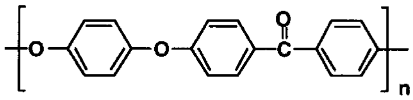

(I I)

The repeating number n in Formula (II) is an integral number and is not specifically limited but may be not less than 10, is preferably not less than 20 and is more preferably not less than 30. The repeating number n is not specifically limited but may be not greater than 10000, is preferably not greater than 5000 and is more preferably not greater than 1000.

The reduced viscosity (η) of the linear poly(phenylene ether ether ketone) according to the embodiment of the invention is not specifically limited. The reduced viscosity (η) of the common linear poly(phenylene ether ether ketone) is generally not lower than 0.1 dL/g, is preferably not lower than 0.2 dL/g and is more preferably not lower than 0.3 dL/g. The reduced viscosity (η) of the common linear poly(phenylene ether ether ketone) is also generally not higher than 2.5 dL/g, is preferably not higher than 2.0 dL/g and is more preferably not higher than 1.8 dL/g. In general, the lower reduced viscosity of the linear poly(phenylene ether ether ketone) or in other words, the lower molecular weight of the linear poly(phenylene ether ether ketone) leads to the higher solubility of the linear poly(phenylene ether ether ketone) in an organic polar solvent. This advantageously shortens the time required for the reaction. The linear poly(phenylene ether ether ketone) having the reduced viscosity in the above range is, however, usable without any essential problem.

The production method of such linear poly(phenylene ether ether ketone) is not specifically limited, but the linear poly(phenylene ether ether ketone) used may be produced by any manufacturing method. One available method may produce the linear poly(phenylene ether ether ketone) by polycondensation reaction of a dihalogenated aromatic compound and a diphenol in the presence of an alkaline salt as described in for example, JP S54-90296A or JP S59-93724A. A wide range of molded products using the poly(phenylene ether ether ketone) produced by any of these methods, as well as molding waste, waste plastics and off-specification products may also be used as the poly(phenylene ether ether ketone).

A cyclic compound is generally produced by competing reactions of producing the cyclic compound and producing a linear compound. In a method of producing cyclic poly(phenylene ether ether ketone), a considerable amount of a linear poly(phenylene ether ether ketone) is accordingly produced as a byproduct, other than the cyclic poly(phenylene ether ether ketone) as the objective substance. The embodiment of the invention enables this linear poly(phenylene ether ether ketone) obtained as the byproduct to be used as the raw material without any difficulty. An especially preferable procedure uses a linear poly(phenylene ether ether ketone) obtained by separating cyclic poly(phenylene ether ether

ketone) from a mixture that includes the cyclic poly(phenylene ether ether ketone) and the linear poly(phenylene ether ether ketone) and is produced by the preferable method of producing the cyclic poly(phenylene ether ether ketone) according to the embodiment of the invention described below.

In production of the cyclic poly(phenylene ether ether ketone) which is a cyclic compound, the linear poly(phenylene ether ether ketone) which is a linear compound as the byproduct has conventionally been discarded as useless. Production of the cyclic compound accordingly has problems of a large amount of waste caused by this linear compound as the byproduct and a low yield relative to the raw material monomer. The embodiment of the invention enables the linear poly(phenylene ether ether ketone) as the byproduct to be used as the raw material. This is of great significance in terms of significantly reducing the amount of waste and drastically improving the yield relative to the raw material monomer.

The form of the linear poly(phenylene ether ether ketone) used is not specifically limited but may be powder, particle, granule or pellet in the dried state, as well as in the state that includes an organic polar solvent as the reaction solvent. The linear poly(phenylene ether ether ketone) used may be in the state that includes a third component that does not essentially interfere with the reaction. The third component may be, for example, an inorganic filler. The linear poly(phenylene ether ether ketone) used may be in the form of a resin composition of linear poly(phenylene ether ether ketone) including an inorganic filler.

(3) Dihalogenated Aromatic Ketone Compound

A dihalogenated aromatic ketone compound used according to the embodiment of the invention is an aromatic ketone compound expressed by a general formula (III):

[Chem. 8]

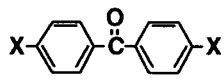

(III)

Herein X in the general formula (III) represents a halogeno group selected from, for example, fluorine, chlorine, bromine, iodine and astatine. Two halogeno groups included in the general formula (III) may be identical halogeno groups or may be different halogeno groups. Concrete examples of the dihalogenated aromatic ketone compound include 4,4'-difluorobenzophenone, 4,4'-dichlorobenzophenone, 4,4'-dibromobenzophenone, 4,4'-diiodobenzophenone, 4-fluoro-4'-chlorobenzophenone, 4-fluoro-4'-bromobenzophenone, 4-fluoro-4'-iodobenzophenone, 4-chloro-4'-bromobenzophenone, 4-chloro-4'-iodobenzophenone and 4-bromo-4'-idodobenzophenone. Among these compounds, 4,4'-difluorobenzophenone is specified as a preferable concrete example in terms of the reactivity, and 4,4'-dichlorobenzophenone is specified as a preferable concrete examples in terms of the economic efficiency. Especially preferable concrete example is 4,4'-difluorobenzophenone. The dihalogenated aromatic ketone compound used may be a single compound or may be a mixture of two or more compounds.

(4) Dihydroxy Aromatic Compound

A dihydroxy aromatic compound used in production of the cyclic poly(phenylene ether ether ketone) composition according to the embodiment of the invention is an aromatic compound expressed by a general formula (IV):

[Chem. 9]

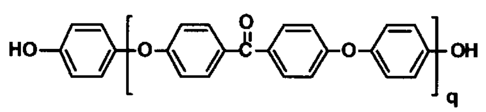

(IV)

The repeating number q in the general formula (IV) herein is an integral number and is not specifically limited, but hydroquinone having q=0 may be specified as a preferable concrete example. The upper limit of the repeating number q in the general formula (IV) is also not specifically restricted, but a dihydroxy aromatic compound having q=2 or below may be specified as a preferable dihydroxy aromatic compound. The dihydroxy aromatic compound used may be a single compound or a mixture of two or more compounds.

(5) Organic Polar Solvent

The organic polar solvent used in the production method of the cyclic poly(phenylene ether ether ketone) according to the embodiment of the invention is not specifically limited but may be any organic polar solvent that does not substantially interfere with the reaction and does not substantially cause any undesirable side reaction, such as degradation of the produced cyclic poly(phenylene ether ether ketone). Concrete examples of such organic polar solvent include nitrogen-containing polar solvents such as N-methyl-2-pyrrolidone (NMP), N-methylcaprolactam, N,N-dimethylformamide (DMF), N,N-dimethylacetamide (DMAc), 1,3-dimethyl-2-imidazolidinone (DMI), hexamethylphosphoramide and tetramethylurea; sulfoxide and sulfone-based solvents such as dimethylsulfoxide (DMSO), dimethyl sulfone, diphenylsulfone and sulfolane; nitrile-based solvents such as benzonitrile; diaryl ethers such as diphenyl ether; ketones such as benzophenone and acetophenone; and mixtures thereof. Any of these organic polar solvents has the high reaction stability and is thus preferably used. Among them, preferable are N-methyl-2-pyrrolidone and dimethylsulfoxide; and especially preferable is N-methyl-2-pyrrolidone. These organic polar solvents have excellent stability in a high temperature range and are also preferable in terms of the availability.

(6) Base

The production method of the cyclic poly(phenylene ether ether ketone) composition and the linear poly(phenylene ether ether ketone) according to the embodiment of the invention uses, as the base, a base mixture of at least one species selected between sodium carbonate and sodium bicarbonate and at least one species selected among carbonates and bicarbonates of alkali metals having higher atomic numbers than sodium. The embodiment of the invention includes a method of using, as the base, a base mixture of at least one species selected between sodium carbonate and sodium bicarbonate and at least one species selected among carbonates and bicarbonates of alkali metals having higher atomic numbers than sodium.

The carbonates of alkali metals having higher atomic numbers than sodium include, for example, potassium carbonate, rubidium carbonate and cesium carbonate. The bicarbonates of alkali metals having higher atomic numbers than sodium include, for example, potassium hydrogen carbonate, rubidium hydrogen carbonate and cesium hydrogen carbonate. The base used may be a mixture of sodium carbonate and potassium carbonate, a mixture of sodium carbonate and rubidium carbonate, a mixture of sodium carbonate and cesium carbonate, a mixture of sodium carbonate and potassium hydrogen carbonate, a mixture of sodium carbonate and rubidium hydrogen carbonate, a mixture of sodium carbonate and cesium hydrogen carbonate, a mixture of sodium hydrogen carbonate and potassium carbonate, a mixture of sodium hydrogen carbonate and rubidium carbonate, a mixture of sodium hydrogen carbonate and cesium carbonate, a mixture of sodium hydrogen carbonate and potassium hydrogen carbonate, a mixture of sodium hydrogen carbonate and rubidium hydrogen carbonate and a mixture of sodium hydrogen carbonate and cesium hydrogen carbonate. Among these, in terms of easy handling and the reactivity, a mixture of sodium carbonate and potassium carbonate, a mixture of sodium carbonate and sodium hydrogen carbonate, a mixture of sodium hydrogen carbonate and potassium carbonate and a mixture of sodium hydrogen carbonate and potassium hydrogen carbonate are preferable, and sodium carbonate and a mixture of sodium carbonate and potassium carbonate are more preferable. Using any of these preferable bases is likely to avoid the problem of black coating of a stainless steel reaction tank, which is observed, for example, in the case of using potassium carbonate alone as the base and is likely to avoid the problem of production of impurity structure such as "ether ketone" that is different from "ether ether ketone" in the linear poly(phenylene ether ether ketone) obtained by the reaction.

In the case of using the base mixture described above as the base, the addition amount of one species selected among the carbonates and the bicarbonates of the alkali metals having the higher atomic number than sodium depends on the used species of the carbonate or the bicarbonate of the alkali metal having a higher atomic number than sodium and is thus not unequivocally determined. The content of the alkali metal having the higher atomic number than sodium relative to 1.0 mol of sodium is, however, preferably not lower than 0.01 mol, is more preferably not lower than 0.02 mol, is furthermore preferably not lower than 0.03 mol and is especially preferably not lower than 0.05 mol.

The upper limit of the addition amount of one species selected among the carbonates and the bicarbonates of the alkali metals having higher atomic numbers than sodium in the base mixture is not specifically restricted. The content of the alkali metal having the higher atomic number than sodium relative to 1.0 mol of sodium is preferably not higher than 10.0 mol, is preferably not higher than 5.0 mol, is furthermore preferably not higher than 3.0 mol and is especially preferably not higher than 1.0 mol. Further reduction of the upper limit to be not higher than 0.5 mol or even not higher than 0.1 mol is furthermore preferable. Controlling the addition amount of one species selected among the carbonates and the bicarbonates of the alkali metals having higher atomic numbers than sodium in the base mixture to the above desired range is likely to avoid the problem of production of impurity structure such as "ether ketone" that is different from "ether ether ketone" in the linear poly(phenylene ether ether ketone) obtained by the reaction.

(7) Production Method of Cyclic Poly(Phenylene Ether Ether Ketone) Composition and Linear Poly(Phenylene Ether Ether Ketone)

The production method of the cyclic poly(phenylene ether ether ketone) composition and the linear poly(phenylene ether ether ketone) according to the embodiment of the invention is preferably a production method (I) of reacting at least a linear poly(phenylene ether ether ketone), a dihalogenated aromatic ketone compound, a dihydroxy aromatic compound and a base in an organic polar solvent or a production method (II) of performing a reaction (A) by heating a mixture that includes at least a linear poly(phenylene ether ether ketone), a dihydroxy aromatic compound, a base and an organic polar solvent and subsequently performing a reaction (B) by adding a dihalogenated aromatic ketone compound to a resulting reaction mixture obtained by the reaction (A) such as to be 1.0 to 1.5 mol per 1 mol of the dihydroxy aromatic compound used in the reaction (A). The following describes these preferable production methods in detail.

(7)-1. Production Method (I)

A preferable production method of the cyclic poly(phenylene ether ether ketone) composition and the linear poly(phenylene ether ether ketone) is a method of reacting at least a linear poly(phenylene ether ether ketone), a dihalogenated aromatic ketone compound, a dihydroxy aromatic compound and a base in an organic polar solvent.

In production of the cyclic poly(phenylene ether ether ketone) composition and the linear poly(phenylene ether ether ketone) by this preferable production method (I), the amount of the organic polar solvent included in the reaction mixture is preferably not less than 1.20 liters, is more preferably not less than 1.30 liters, is furthermore preferably not less than 1.50 liters and is especially preferably not less than 2.0 liters per 1.0 mol of the benzene ring component in the reaction mixture. The upper limit of the amount of the organic polar solvent in the reaction mixture is not specifically limited but is preferably not more than 100 liters, is more preferably not more than 50 liters, is furthermore preferably not more than 20 liters and is especially preferably not more than 10 liters per 1.0 mol of the benzene ring component in the reaction mixture.

The greater amount of the organic polar solvent used is likely to enhance the selectivity for production of the cyclic poly(phenylene ether ether ketone). The excessive amount of the organic polar solvent used is, however, likely to reduce the production amount of the cyclic poly(phenylene ether ether ketone) per unit volume of a reaction vessel and is likely to extend the time required for the reaction. Accordingly, it is preferable to control the used amount of the organic polar solvent to the above range, in terms of achieving the good balance between the selectivity for production of the cyclic poly(phenylene ether ether ketone) and the productivity.

The amount of the organic polar solvent herein is indicated on the basis of the volume of the solvent at ordinary temperature and ordinary pressure. The used amount of the organic polar solvent in the reaction mixture is an amount by subtracting the amount of the organic polar solvent expelled out of the reaction system by, for example, dehydration operation from the amount of the organic polar solvent introduced into the reaction system. The benzene ring component in the reaction mixture herein denotes a benzene ring component included in the raw material that is likely to form the structural component of the cyclic poly(phenylene ether ether ketone) by the reaction. The "mole number" of the benzene ring component in the raw material denotes the "number of benzene rings constituting a compound". For example, the calculated "mole number" of the benzene ring component in the raw material is 2 mol of the benzene ring component for 1 mol of 4,4'-difluorobenzophenone, 1 mol of the benzene ring component for 1 mol of hydroquinone, and 3 mol of the benzene ring component for a mixture including 1 mol of 4,4'-difluorobenzophenone and 1 mol of hydroquinone.

The linear poly(phenylene ether ether ketone) used for the reaction is also the raw material that is likely to form the structural component of the cyclic poly(phenylene ether ether ketone). There is accordingly a necessity to take into account the mole number of the benzene ring component in the linear poly(phenylene ether ether ketone). The linear poly(phenylene ether ether ketone) and the cyclic poly(phenylene ether ether ketone) are polymers including three benzene rings in their repeating units. The "mole number" of the benzene ring component included in the linear poly(phenylene ether ether ketone) or in the cyclic poly(phenylene ether ether ketone) is thus equal to the "number of repeating units of poly(phenylene ether ether ketone) $\times$ 3". For example, the calculated "mole number" of the benzene ring component is not 1 mol but is 300 mol of the benzene ring component for 1 molecule of poly(phenylene ether ether ketone) having the polymerization degree of 100. The benzene ring component is regarded as 0 mole for a component such as toluene that is unlikely to form the structural component of the cyclic poly(phenylene ether ether ketone) by the reaction.

In the preferable production method (I) of the cyclic poly(phenylene ether ether ketone) composition and the linear poly(phenylene ether ether ketone), the used amount of the dihydroxy aromatic compound is preferably not lower than 0.8 mol, is more preferably not lower than 0.9 mol, is furthermore preferably not lower than 0.95 mol and is especially preferably not lower than 0.97 mol relative to 1.0 mol of the dihalogenated aromatic ketone compound. The used amount of the dihydroxy aromatic compound in the production method (I) is preferably not higher than 1.2 mol, is more preferably not higher than 1.1 mol, is furthermore preferably not higher than 1.05 mol and is especially preferably not higher than

1.03 mol relative to 1.0 mol of the dihalogenated aromatic ketone compound. It is preferable to control the used amount of the dihydroxy aromatic compound to the above desired range, since it is likely to suppress the degradation reaction of the produced cyclic poly(phenylene ether ether ketone) and is also likely to suppress production of the linear poly(phenylene ether ether ketone) that is not readily separable from the cyclic poly(phenylene ether ether ketone).

The used amount of the base in the production method (I) is preferably not less than an equivalent as the stoichiometric ratio to the dihydroxy aromatic compound used for the reaction. On the assumption that the used amount of a divalent base such as sodium carbonate or potassium carbonate is Y mol and the used amount of a monovalent base such as sodium hydrogen carbonate or potassium hydrogen carbonate is Z mol, the concrete used amount of the base expressed as (Y+2Z) is preferably in the range of 1.0 to 1.10 mol, is more preferably in the range of 1.00 mol to 1.05 mol and is furthermore preferably in the range of 1.00 mol to 1.03 mol relative to 1.0 mol of the dihydroxy aromatic compound used for the reaction. It is preferable to control the used amount of the base in the production method (I) to this desired range, since it allows for sufficient production of a metal salt of the dihydroxy aromatic compound and additionally suppresses the progress of an undesirable reaction such as degradation reaction of the produced cyclic poly(phenylene ether ether ketone) by a large excess of the base. A "large excess" of the base herein means that the amount of the base (Y+2Z) is in a range of not lower than 2.0 mol relative to 1.0 mol of the dihydroxy aromatic compound.

A metal salt of a dihydroxy aromatic compound prepared separately from the dihydroxy aromatic compound and a base may be used for production of the cyclic poly(phenylene ether ether ketone) composition and the linear poly(phenylene ether ether ketone) by the production method (I). In this case, an excess amount of the base may be supplied by addition of the preferable base described above. The supplied excess amount of the base expressed as (Y+2Z) is preferably in the range of 0 to 0.10 mol, is more preferably in the range of 0 to 0.05 mol and is furthermore preferably in the range of 0 to 0.03 mol relative to 1.0 mol of the dihydroxy aromatic compound used for production of the cyclic poly(phenylene ether ether ketone) composition. It is preferable to control the excess amount of the base to this desired range, since it suppresses the progress of an undesirable reaction such as degradation reaction of the cyclic poly(phenylene ether ether ketone).

In the production method (I) of the cyclic poly(phenylene ether ether ketone) composition and the linear poly(phenylene ether ether ketone) by the reaction by heating the mixture including at least the linear poly(phenylene ether ether ketone), the dihalogenated aromatic ketone compound, the dihydroxy aromatic compound, the base and the organic polar solvent, the used amount of the linear poly(phenylene ether ether ketone) should be determined such that a reaction mixture includes the linear poly(phenylene ether ether ketone) at the start of reaction or more specifically at the stage that the conversion ratio of the dihalogenated aromatic ketone compound supplied in the reaction system is 0. With respect to a repeating unit of the following formula that is the primary structural unit of the linear poly(phenylene ether ether ketone), the used amount of the linear poly(phenylene ether ether ketone) expressed by the repeating unit molar ratio is preferably not lower than 0.1, is more preferably not lower than 0.25, is furthermore preferably not lower than 0.5 and is especially preferably not lower than 1 relative to 1 mol of the dihydroxy aromatic compound.

[Chem. 10]

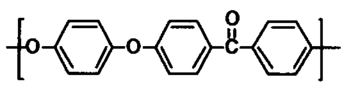

The repeating unit molar ratio of the linear poly(phenylene ether ether ketone) is also preferably not higher than 30, is more preferably not higher than 20, is furthermore preferably not higher than 15 and is especially preferably not higher than 10 relative to 1 mol of the dihydroxy aromatic compound. Controlling the used amount of the linear poly(phenylene ether ether ketone) to the desired range is likely to obtain especially the cyclic poly(phenylene ether ether ketone) at a high yield and is additionally likely to ensure the progress of the reaction in a short time.

In the process of the reaction by heating the mixture including at least the linear poly(phenylene ether ether ketone), the dihalogenated aromatic ketone compound, the dihydroxy aromatic compound, the base and the organic polar solvent, the reaction temperature differs depending on the species and the amounts of the dihalogenated aromatic ketone compound, the dihydroxy aromatic compound, the base, the organic polar solvent and the linear poly(phenylene ether ether ketone) used for the reaction and is thus not unequivocally determined. The reaction temperature is, however, generally not lower than 120°C, is preferably not lower than 150°C and is more preferably not lower than 200°C. The reaction temperature is also generally not higher than 350°C, is preferably not higher than 330°C and is more preferably not higher than 320°C. The reaction temperature in this desired temperature range is likely to provide the higher reaction rate. The reaction may be a one-step reaction at a constant temperature, a multi-step reaction with a stepwise temperature increase or a reaction with a continuous temperature change.

The reaction time depends on the species and the amounts of the raw materials used and the reaction temperature and is thus not unequivocally determined. The reaction time is, however, generally preferably not shorter than 0.1 hours, is more preferably not shorter than 0.5 hours and is furthermore preferably not shorter than 1 hour. The reaction time of not shorter than this desired time is likely to sufficiently reduce the unreacted raw material components. The upper limit of the reaction time is not specifically restricted, but the reaction time of not longer than 40 hours ensures the sufficient progress of the reaction. The reaction time may be preferably not longer than 10 hours or more preferably not longer than 6 hours.

In the process of the reaction by heating at least the linear poly(phenylene ether ether ketone), the dihalogenated aromatic ketone compound, the dihydroxy aromatic compound and the base in the organic polar solvent, a component that does not substantially interfere with the reaction or a component that has the effect of accelerating the reaction may be added, in addition to the above essential components. The process of the reaction is not specifically limited, but it is preferable that the reaction proceeds under the stirring condition. Additionally, in the production method (I) of the cyclic poly(phenylene ether ether ketone) composition and the linear poly(phenylene ether ether ketone) according to the embodiment of the invention, any of known various polymerization systems and reaction systems, such as batch system or continuous system, may be employed. The atmosphere during the production is preferably a non-oxidizing atmosphere, is more preferably an inert gas atmosphere such as nitrogen, helium or argon and is furthermore preferably a nitrogen atmosphere, because of the economic efficiency and easy handling.

In the process of the reaction by heating the mixture including at least the linear poly(phenylene ether ether ketone), the dihalogenated aromatic ketone compound, the dihydroxy aromatic compound, the base and the organic polar solvent, the presence of a large amount of water in the reaction system is likely to exert adverse effects, for example, reduction of the reaction rate and production of a byproduct that is not readily separable from the cyclic poly(phenylene ether ether ketone). The water content present in the reaction during the reaction is preferably not higher than 3.0% by weight, is more preferably not higher than 1.0% by weight, is furthermore preferably not higher than 0.5% by weight and is especially preferably not higher than 0.3% by weight. It is preferable to control the water content to be not higher than this desired range by expelling the water in the case of using a hydrate or an aqueous mixture as the base or the water produced as the byproduct of the reaction out of the reaction system as needed basis.

The water content present in the system herein is expressed by the weight fraction relative to the total weight of the reaction mixture and may be measured by the Karl Fischer method. The timing of the dehydration operation is not specifically limited but is preferably after mixing the essential components in the production method (I). The method of removing water may be any method that can expel water out of the reaction system; for example, the method of dehydration by high temperature heating or the method by azeotropic distillation using an azeotropic solvent. In terms of the dehydration efficiency, the method by azeotropic distillation is preferable. The azeotropic solvent used for azeotropic distillation herein may be any organic compound that can form an azeotropic mixture with water, such that the boiling point of the azeotropic mixture is lower than the boiling point of the organic polar solvent used for the reaction. Concrete examples of the azeotropic solvent include hydrocarbon-based solvents such as hexane, cyclohexane, heptane, benzene, toluene and xylene; and inactive chlorinated aromatic compounds such as chlorobenzene and dichlorobenzene. Among them, toluene and xylene are the preferable azeotropic solvents.

The amount of the azeotropic solvent required for formation of the azeotropic mixture with water differs depending on the amount of water present in the system and the solvent species and is thus not unequivocally determined. It is, however, preferable to use an excess amount of the azeotropic solvent that is greater than the required amount for removing the water present in the reaction system in the form of the azeotropic mixture. More specifically, the amount of the azeotropic solvent is preferably not less than 0.2 liters, is more preferably not less than 0.5 liters and is furthermore preferably not less than 1.0 liter relative to 1.0 mol of the dihydroxy aromatic compound in the mixture. The upper limit of the amount of the azeotropic solvent is, on the other hand, not specifically restricted but is preferably not more than 20.0 liters, is more preferably not more than 10.0 liters and is furthermore preferably not more than 5.0 liters relative to 1.0 mol of the dihydroxy aromatic compound in the mixture. The excessively large amount of the azeotropic solvent lowers the polarity of the mixture and is thereby likely to reduce the efficiency of the reaction of the base with the dihydroxy aromatic compound. The amount of the azeotropic solvent herein is expressed by the volume of the solvent at ordinary temperature and ordinary pressure. When azeotropic distillation of water is performed based on the principle of a Dean-Stark apparatus, the amount of the azeotropic solvent in the reaction system can be maintained constant, so that the used amount of the azeotropic solvent may be further reduced.

The temperature for expelling water out of the reaction system is not unequivocally determined, since the boiling point of the azeotropic mixture with water differs depending on the azeotropic solvent species. The temperature is, however, preferably not lower than the boiling point of the azeotropic mixture with water but not higher than the boiling point of the organic polar solvent used for the reaction. More specifically, the temperature for expelling water out of the reaction system may be in the range of 60 to 170°C, is preferably in the range of 80 to 170°C, is more preferably in the range of 100 to 170°C and is furthermore preferably in the range of 120 to 170°C. Removal of water may be performed by a method employing a constant temperature in the desired temperature range, a method increasing the temperature

stepwise or a method changing the temperature continuously. Additionally, azeotropic distillation under reduced pressure is also a preferable method. Azeotropic distillation under reduced pressure is likely to remove water with the higher efficiency.

It is preferable to expel the above azeotropic solvent out of the system after azeotropic distillation of water. The timing of expelling the azeotropic solvent out of the system is preferably after completion of the azeotropic distillation of water. A large amount of the azeotropic solvent remaining in the system lowers the polarity of the reaction system and is likely to reduce the reaction rate of production of the cyclic poly(phenylene ether ether ketone). It is accordingly desired to perform the removal operation of the azeotropic solvent. The amount of the azeotropic solvent remaining in the system during the production reaction of the cyclic poly(phenylene ether ether ketone) is preferably not greater than 20%, is more preferably not greater than 10%, is furthermore preferably not greater than 8% and is especially preferably not greater than 6% relative to the amount of the organic polar solvent used in the production method (I). Removal of the azeotropic solvent to be not greater than this preferable range is of importance. A preferable method employs distillation for removal of the azeotropic solvent and may use an inert gas, such as nitrogen, helium or argon, as the carrier gas. Another preferable method performs distillation under reduced pressure. This is likely to remove the azeotropic solvent with the higher efficiency.

The temperature for removing the azeotropic solvent may be any temperature that can expel the azeotropic solvent out of the reaction system. More specifically, the temperature for removing the azeotropic solvent is in the range of 60 to 170°C, is preferably in the range of 100 to 170°C, is more preferably in the range of 120 to 170°C and is furthermore preferably in the range of 140 to 170°C. Removal of the azeotropic solvent may be performed by a method employing a constant temperature in the desired temperature range, a method increasing the temperature stepwise or a method changing the temperature continuously.

(7)-2. Production Method (II)

Another preferable production method of the cyclic poly(phenylene ether ether ketone) composition and the linear poly(phenylene ether ether ketone) different from the production method (I) is a method of performing a reaction (A) by heating a mixture that includes at least a linear poly(phenylene ether ether ketone), a dihydroxy aromatic compound, a base and an organic polar solvent and subsequently performing a reaction (B) by adding a dihalogenated aromatic ketone compound to a resulting reaction mixture obtained by the reaction (A) such as to be 1.0 to 1.5 mol per 1 mol of the dihydroxy aromatic compound used in the reaction (A). Employing this production method enhances the yield.

The following describes the reaction (A) and the reaction (B).

Reaction (A):

The reaction (A) is a reaction by heating a mixture including at least a linear poly(phenylene ether ether ketone), a dihydroxy aromatic compound, a base and an organic polar solvent.

The used amount of the linear poly(phenylene ether ether ketone) in the reaction (A) should be determined such that a reaction mixture includes the linear poly(phenylene ether ether ketone) at the start of reaction. With respect to a repeating unit of the following formula that is the primary structural unit of the linear poly(phenylene ether ether ketone), the used amount of the linear poly(phenylene ether ether ketone) expressed by the repeating unit molar ratio is preferably not lower than 0.1, is more preferably not lower than 0.25, is furthermore preferably not lower than 0.5 and is especially preferably not lower than 1 relative to 1 mol of the dihydroxy aromatic compound.

[Chem. 11]

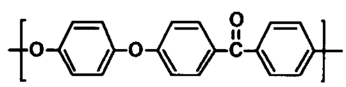

With respect to this repeating unit, the repeating unit molar ratio of the linear poly(phenylene ether ether ketone) is also preferably not higher than 30, is more preferably not higher than 20, is furthermore preferably not higher than 15 and is especially preferably not higher than 10 relative to 1 mol of the dihydroxy aromatic compound. Controlling the used amount of the linear poly(phenylene ether ether ketone) to the desired range is likely to obtain the cyclic poly(phenylene ether ether ketone) at a high yield in the reaction (B) performed subsequent to the reaction (A) and is additionally likely to ensure the progress of the reaction in a short time.

The amount of the organic polar solvent used for the reaction (A) is not specifically limited, but may be not more than 100 liters, is preferably not more than 50 liters, is more preferably not more than 20 liters and is especially preferably

not more than 10 liters relative to 1.0 mol of the benzene ring component included in the raw material that is likely to form the structural component of poly(phenylene ether ether ketone) by the reaction in the reaction mixture. The lower limit of the used amount of the organic polar solvent is also not specifically restricted but is preferably not less than 0.2 liters, is more preferably not less than 0.35 liters and is furthermore preferably not less than 0.5 liters relative to 1.0 mol of the benzene ring component in the reaction mixture, in terms of the efficient reaction. The used amount of the solvent herein is indicated on the basis of the volume of the solvent at ordinary temperature and ordinary pressure. Controlling the used amount of the organic polar solvent to the desired value is likely to improve the consumption rate of the raw material in a short time.

The used amount of the base in the reaction (A) is preferably not less than an equivalent as the stoichiometric ratio to the dihydroxy aromatic compound used. On the assumption that the used amount of a divalent base such as sodium carbonate or potassium carbonate is Y mol and the used amount of a monovalent base such as sodium hydrogen carbonate or potassium hydrogen carbonate is Z mol, the concrete used amount of the base expressed as (Y+2Z) is preferably in the range of 1.0 to 1.10 mol, is more preferably in the range of 1.00 mol to 1.05 mol and is furthermore preferably in the range of 1.00 mol to 1.03 mol relative to 1.0 mol of the dihydroxy aromatic compound used for the reaction (A). It is preferable to control the used amount of the base in the reaction (A) to this desired range, since it allows for sufficient production of a metal salt of the dihydroxy aromatic compound and additionally suppresses the progress of an undesirable reaction such as degradation reaction of the linear poly(phenylene ether ether ketone) by a large excess of the base. A "large excess" of the base herein means that the amount of the base (Y+2Z) is in a range of not lower than 2.0 mol relative to 1.0 mol of the dihydroxy aromatic compound.

A metal salt of a dihydroxy aromatic compound prepared separately from the dihydroxy aromatic compound and a base may be used for the reaction (A). In this case, an excess amount of the base may be supplied by addition of the preferable base described above. The supplied excess amount of the base expressed as (Y+2Z) is preferably in the range of 0 to 0.10 mol, is more preferably in the range of 0 to 0.05 mol and is furthermore preferably in the range of 0 to 0.03 mol relative to 1.0 mol of the dihydroxy aromatic compound used for production of the cyclic poly(phenylene ether ether ketone) composition. It is preferable to control the excess amount of the base to this desired range, since it suppresses the progress of an undesirable reaction such as degradation reaction of the linear poly(phenylene ether ether ketone).

In the reaction (A) by heating the mixture including at least the linear poly(phenylene ether ether ketone), the dihydroxy aromatic compound, the base and the organic polar solvent, the reaction temperature depends on the species and the amounts of the dihydroxy aromatic compound, the base, the organic polar solvent and the linear poly(phenylene ether ether ketone) used for the reaction and is thus not unequivocally determined. The reaction temperature is, however, generally not lower than 120°C, is preferably not lower than 150°C and is more preferably not lower than 200°C. The reaction temperature is also generally not higher than 350°C, is preferably not higher than 330°C and is more preferably not higher than 320°C. The reaction temperature in this desired temperature range is likely to provide the higher reaction rate. The reaction may be a one-step reaction at a constant temperature, a multi-step reaction with a stepwise temperature increase or a reaction with a continuous temperature change.

The reaction time depends on the species and the amounts of the raw materials used and the reaction temperature and is thus not unequivocally determined. The reaction time is, however, preferably not shorter than 0.1 hours, is more preferably not shorter than 0.5 hours and is furthermore preferably not shorter than 1 hour. The reaction time of not shorter than this desired time is likely to sufficiently reduce the unreacted raw material components. The upper limit of the reaction time is not specifically restricted, but the reaction time of not longer than 40 hours ensures the sufficient progress of the reaction. The reaction time may be preferably not longer than 10 hours or more preferably not longer than 6 hours.

In the process of the reaction by heating at least the linear poly(phenylene ether ether ketone), the dihydroxy aromatic compound and the base in the organic polar solvent, a component that does not substantially interfere with the reaction or a component that has the effect of accelerating the reaction may be added, in addition to the above essential components. The process of the reaction is not specifically limited, but it is preferable that the reaction proceeds under the stirring condition. In the reaction (A), any of known various polymerization systems and reaction systems, such as batch system or continuous system, may be employed. The atmosphere during the reaction (A) is preferably a non-oxidizing atmosphere, is more preferably an inert gas atmosphere such as nitrogen, helium or argon and is furthermore preferably a nitrogen atmosphere, because of the economic efficiency and easy handling.

In the process of the above reaction (A), the presence of a large amount of water in the reaction system is likely to exert adverse effects, for example, reduction of the reaction rate and the progress of an undesirable reaction such as degradation of the linear poly(phenylene ether ether ketone). The water content present in the reaction during the reaction is preferably not higher than 3.0% by weight, is more preferably not higher than 1.0% by weight, is furthermore preferably not higher than 0.5% by weight and is especially preferably not higher than 0.3% by weight. It is preferable to control the water content to be not higher than this desired range by expelling the water in the case of using a hydrate or an aqueous mixture as the base or the water produced as the byproduct of the reaction out of the reaction system

as needed basis.

The water content present in the system is expressed by the weight fraction relative to the total weight of the reaction mixture and may be measured by the Karl Fischer method. The timing of the dehydration operation is not specifically limited but is preferably after mixing the essential components in the reaction (A). The method of removing water may be any method that can expel water out of the reaction system; for example, the method of dehydration by high temperature heating or the method by azeotropic distillation using an azeotropic solvent. In terms of the dehydration efficiency, the method by azeotropic distillation is preferable. The azeotropic solvent used for azeotropic distillation may be any organic compound that can form an azeotropic mixture with water, such that the boiling point of the azeotropic mixture is lower than the boiling point of the organic polar solvent used for the reaction. Concrete examples of the azeotropic solvent include hydrocarbon-based solvents such as hexane, cyclohexane, heptane, benzene, toluene and xylene; and inactive chlorinated aromatic compounds such as chlorobenzene and dichlorobenzene. Among them, toluene and xylene are the preferable azeotropic solvents.

The amount of the azeotropic solvent required for formation of the azeotropic mixture with water differs depending on the amount of water present in the system and the solvent species and is thus not unequivocally determined. It is, however, preferable to use an excess amount of the azeotropic solvent that is greater than the required amount for removing the water present in the reaction system in the form of the azeotropic mixture. More specifically, the amount of the azeotropic solvent is preferably not less than 0.2 liters, is more preferably not less than 0.5 liters and is furthermore preferably not less than 1.0 liter relative to 1.0 mol of the dihydroxy aromatic compound in the mixture. The upper limit of the amount of the azeotropic solvent is, on the other hand, not specifically restricted but is preferably not more than 20.0 liters, is more preferably not more than 10.0 liters and is furthermore preferably not more than 5.0 liters relative to 1.0 mol of the dihydroxy aromatic compound in the mixture. The excessively large amount of the azeotropic solvent lowers the polarity of the mixture and is thereby likely to reduce the efficiency of the reaction of the base with the dihydroxy aromatic compound. The amount of the azeotropic solvent herein is expressed by the volume of the solvent at ordinary temperature and ordinary pressure.

When azeotropic distillation of water is performed based on the principle of a Dean-Stark apparatus, the amount of the azeotropic solvent in the reaction system can be maintained constant, so that the used amount of the azeotropic solvent may be further reduced. The temperature for expelling water out of the reaction system is not unequivocally determined, since the boiling point of the azeotropic mixture with water differs depending on the azeotropic solvent species. The temperature is, however, preferably not lower than the boiling point of the azeotropic mixture with water but not higher than the boiling point of the organic polar solvent used for the reaction. More specifically, the temperature for expelling water out of the reaction system may be in the range of 60 to 170°C, is preferably in the range of 80 to 170°C, is more preferably in the range of 100 to 170°C and is furthermore preferably in the range of 120 to 170°C. Removal of water may be performed by a method employing a constant temperature in the desired temperature range, a method increasing the temperature stepwise or a method changing the temperature continuously. Additionally, azeotropic distillation under reduced pressure is also a preferable method. Azeotropic distillation under reduced pressure is likely to remove water with the higher efficiency.

It is preferable to expel the above azeotropic solvent out of the system after azeotropic distillation of water. The timing of expelling the azeotropic solvent out of the system is preferably after completion of the azeotropic distillation of water. A large amount of the azeotropic solvent remaining in the system lowers the polarity of the reaction system and is likely to reduce the reaction rate of production of the cyclic poly(phenylene ether ether ketone). It is accordingly desired to perform the removal operation of the azeotropic solvent. The amount of the azeotropic solvent remaining in the system during the production reaction of the cyclic poly(phenylene ether ether ketone) is preferably not greater than 20%, is more preferably not greater than 10%, is furthermore preferably not greater than 8% and is especially preferably not greater than 6% relative to the amount of the organic polar solvent used in the reaction (A). Removal of the azeotropic solvent to be not greater than this preferable range is of importance. A preferable method employs distillation for removal of the azeotropic solvent and may use an inert gas, such as nitrogen, helium or argon, as the carrier gas. Another preferable method performs distillation under reduced pressure. This is likely to remove the azeotropic solvent with the higher efficiency. The temperature for removing the azeotropic solvent may be any temperature that can expel the azeotropic solvent out of the reaction system. More specifically, the temperature for removing the azeotropic solvent is in the range of 60 to 170°C, is preferably in the range of 100 to 170°C, is more preferably in the range of 120 to 170°C and is furthermore preferably in the range of 140 to 170°C. Removal of the azeotropic solvent may be performed by a method employing a constant temperature in the desired temperature range, a method increasing the temperature stepwise or a method changing the temperature continuously.

Reaction (B):

The reaction (B) is a reaction by adding a dihalogenated aromatic ketone compound such as to be 1.0 to 1.5 mol per 1 mol of the dihydroxy aromatic compound used in the reaction (A) and heating the reaction mixture in the

organic polar solvent of not less than 1.20 liters but not more than 100 liters relative to 1.0 mol of the benzene ring component in the reaction mixture.

The reaction mixture obtained by the reaction (A) has the high stability in the form of the reaction solution and may thus be directly used for the reaction (B). A prepolymer separated from the reaction mixture obtained by the reaction (A) under a condition that does not denature or alter the reactant may be used for the reaction (B) as appropriate. The "condition that does not denature or alter the reactant" herein indicates a non-oxidizing atmosphere.

The addition amount of the dihalogenated aromatic ketone compound in the reaction (B) may be in the range of 1.0 to 1.5 mol, is preferably in the range of 1.0 to 1.2 mol and is more preferably in the range of 1.0 to 1.1 mol relative to 1 mol of the dihydroxy aromatic compound used in the reaction (A). It is preferable to control the addition amount of the dihalogenated aromatic ketone compound in the reaction (B) to this desired range, since it is likely to suppress production of a linear poly(phenylene ether ether ketone) oligomer that is not readily separable from the cyclic poly(phenylene ether ether ketone).

The amount of the organic polar solvent used in the reaction (B) is preferably not less than 1.20 liters, is more preferably not less than 1.30 liters, is furthermore preferably not less than 1.50 liters and is especially preferably not less than 2.0 liters per 1.0 mol of the benzene ring component in the reaction mixture. The upper limit of the amount of the organic polar solvent in the reaction mixture is not specifically limited but is preferably not more than 100 liters, is more preferably not more than 50 liters, is furthermore preferably not more than 20 liters and is especially preferably not more than 10 liters per 1.0 mol of the benzene ring component in the reaction mixture. The greater amount of the organic polar solvent used is likely to enhance the selectivity for production of the cyclic poly(phenylene ether ether ketone). The excessive amount of the organic polar solvent used is, however, likely to reduce the production amount of the cyclic poly(phenylene ether ether ketone) per unit volume of a reaction vessel and is likely to extend the time required for the reaction. Accordingly, it is preferable to control the used amount of the organic polar solvent to the above range, in terms of achieving the good balance between the selectivity for production of the cyclic poly(phenylene ether ether ketone) and the productivity. In order to control the used amount of the organic polar solvent to the desired range in the reaction (B), a preferable method may add the organic polar solvent along with the dihalogenated aromatic ketone compound to the reaction mixture obtained by the reaction (A).

The preferable reaction temperature in the reaction (B) differs depending on the species and the amounts of the components in the reaction mixture and the molecular weight of the prepolymer included in the reaction mixture obtained by the reaction (A) and is thus not unequivocally determined. The reaction temperature is, however, generally not lower than 120°C, is preferably not lower than 170°C and is more preferably not lower than 200°C. The reaction temperature is also generally not higher than 350°C, is preferably not higher than 300°C and is more preferably not higher than 270°C. The reaction temperature in this desired temperature range is likely to provide the higher reaction rate and facilitate the progress of the homogeneous reaction and is also unlikely to cause degradation of the resulting cyclic poly(phenylene ether ether ketone). This is thus likely to produce the cyclic poly(phenylene ether ether ketone) with high efficiency. The reaction may be a one-step reaction at a constant temperature, a multi-step reaction with a stepwise temperature increase or a reaction with a continuous temperature change.

The reaction time in the reaction (B) depends on the molecular weight of the prepolymer included in the reaction mixture obtained by the reaction (A), the species of the dihalogenated aromatic ketone compound and the organic polar solvent, the amounts of these raw materials and the reaction time and is thus not unequivocally determined. The reaction time in the reaction (B) may, however, be not shorter than 0.05 hours, is preferably not shorter than 0.1 hours, is more preferably not shorter than 0.5 hours and is furthermore preferably not shorter than 1 hour. The reaction time of not shorter than this desired time is likely to sufficiently reduce the unreacted raw material components. The upper limit of the reaction time is not specifically restricted, but the reaction time of not longer than 10 hours ensures the sufficient progress of the reaction. The reaction time may be preferably not longer than 6 hours or more preferably not longer than 3 hours.

(8) Recovery method of Cyclic Poly(Phenylene Ether Ether Ketone) Composition

The cyclic poly(phenylene ether ether ketone) composition according to the embodiment of the invention may be separated and recovered from the reaction mixture obtained by the production method described in the preceding chapter (7). The reaction mixture obtained by the above production method includes at least the cyclic poly(phenylene ether ether ketone), the linear poly(phenylene ether ether ketone) and the organic polar solvent and may further include the unreacted raw materials, a byproduct salt, water and the azeotropic solvent as the other components. The method employed to recover the cyclic poly(phenylene ether ether ketone) from this reaction mixture is not specifically limited but may be, for example, a method of removing some part or most part of the organic polar solvent from the reaction mixture by distillation or another operation as needed and subsequently exposing the reaction mixture, with heating when desired, to a solvent that has low solubility for the poly(phenylene ether ether ketone) component, is miscible with the organic polar solvent, and has solubility for the byproduct salt, so as to recover the cyclic poly(phenylene ether ether

ketone) in the form of a solid mixture with the linear poly(phenylene ether ether ketone). The solvent having such characteristics is generally a solvent of relatively high polarity. The preferable solvent differs depending on the organic polar solvent species used and the byproduct salt species and is thus not specifiable. Available examples of the solvent having such characteristics include water, alcohols such as methanol, ethanol, propanol, isopropyl alcohol, butanol and hexanol, ketones such as acetone and methyl ethyl ketone and acetates such as ethyl acetate and butyl acetate. In terms of the availability and the economic efficiency, water, methanol and acetone are preferable, and water is especially preferable.

Such treatment using the above solvent can reduce the amount of the organic polar solvent and the amount of the byproduct salt contained in the solid mixture of the cyclic poly(phenylene ether ether ketone) and the linear poly(phenylene ether ether ketone). This treatment causes both the cyclic poly(phenylene ether ether ketone) and the linear poly(phenylene ether ether ketone) to precipitate as solid components, so that the mixture of the cyclic poly(phenylene ether ether ketone) and the linear poly(phenylene ether ether ketone may be recovered by a known solid-liquid separation technique. This is likely to further reduce the amount of the organic polar solvent and the amount of the byproduct salt contained in the solid mixture of the cyclic poly(phenylene ether ether ketone) and the linear poly(phenylene ether ether ketone).

A method employed for the above treatment using the solvent may be a method of mixing the solvent with the reaction mixture with appropriately stirring or heating as needed. The temperature of the treatment using the solvent is not specifically limited but is preferably not lower than 20°C and is more preferably not lower than 50°C as the lower limit. The temperature is also preferably not higher than 220°C and is more preferably not higher than 200°C as the upper limit. This temperature range facilitates removal of, for example, the byproduct salt and preferably allows for treatment in a relatively low pressure condition. In an application using water as the solvent, the water is preferably distilled water or deionized water. The solvent used may be an aqueous solution appropriately including an organic acidic compound such as formic acid, acetic acid, propionic acid, butyric acid, chloroacetic acid, dichloroacetic acid, acrylic acid, crotonic acid, benzoic acid, salicylic acid, oxalic acid, malonic acid, succinic acid, phthalic acid or fumaric acid, any of alkali metal salts and alkaline earth metal salts thereof, an inorganic acidic compound such as sulfuric acid, phosphoric acid, hydrochloric acid, carbonic acid or silicic acid, or ammonium ion. When the solid mixture of the cyclic poly(phenylene ether ether ketone) and the linear poly(phenylene ether ether ketone) obtained after such treatment contains the solvent used for the treatment, the solvent may be removed by, for example, drying the solid mixture as needed.

The above recovery method provides a cyclic poly(phenylene ether ether ketone) composition. In other words, the above recovery method causes the cyclic poly(phenylene ether ether ketone) to be recovered in the form of the mixture with the linear poly(phenylene ether ether ketone). A method employed to separate and recover the cyclic poly(phenylene ether ether ketone) from this mixture in order to further increase the content of the cyclic poly(phenylene ether ether ketone) in this composition may be, for example, a separation method taking advantage of the difference in solubility between the cyclic poly(phenylene ether ether ketone) and the linear poly(phenylene ether ether ketone). More specifically, an available method may expose the above mixture of the cyclic poly(phenylene ether ether ketone) and the linear poly(phenylene ether ether ketone), with heating as needed, to a solvent that has high solubility for the cyclic poly(phenylene ether ether ketone) but low solubility for the linear poly(phenylene ether ether ketone) and thereby obtain the cyclic poly(phenylene ether ether ketone) as a solvent-soluble component. As is generally known, the linear poly(phenylene ether ether ketone) has high crystallinity and extremely low solubility in solvents. There is a significant difference in solubility between the cyclic poly(phenylene ether ether ketone) and the linear poly(phenylene ether ether ketone) in a solvent, so that the cyclic poly(phenylene ether ether ketone) can be obtained with high efficiency by the above separation method taking advantage of the solubility difference.

The solvent used for this purpose is not specifically limited but may be any solvent that is capable of dissolving the cyclic poly(phenylene ether ether ketone). In an environment of such dissolution, the solvent used is preferably a solvent that dissolves the cyclic poly(phenylene ether ether ketone) but hardly dissolves the linear poly(phenylene ether ether ketone) and is more preferably a solvent that does not dissolve the linear poly(phenylene ether ether ketone).

The pressure in the reaction system that exposes the mixture of the cyclic poly(phenylene ether ether ketone) and the linear poly(phenylene ether ether ketone) to the above solvent is preferably ordinary pressure or slightly increased pressure and is especially preferably ordinary pressure. The reaction system in such pressure has the advantage that members constituting a reactor are inexpensive. From this point of view, it is preferable to avoid a pressurized condition that needs an expensive pressure vessel, as the pressure in the reaction system. The solvent used is preferably a solvent that does not substantially cause any undesirable side reaction such as degradation or crosslinking of the poly(phenylene ether ether ketone) component. Examples of the preferable solvent for the operation of exposing the above mixture to the solvent under a reflux condition at ordinary pressure include hydrocarbon solvents such as pentane, hexane, heptane, octane, cyclohexane, cyclopentane, benzene, toluene and xylene; halogenated solvents such as chloroform, bromoform, methylene chloride, 1,2-dichloroethane, 1,1,1-trichloroethane, chlorobenzene and 2,6-dichlorotoluene; ether solvents such as diethyl ether, tetrahydrofuran and diisopropyl ether; and polar solvents such as N,N-dimethylformamide, N,N-dimethylacetamide, dimethyl sulfoxide, trimethylphosphoric acid and N,N-dimethylimidazolidinone. Among them, preferable are benzene, toluene, xylene, chloroform, bromoform, methylene chloride, 1,2-dichloroethane, 1,1,1-trichloroethane, chlorobenzene, 2,6-dichlorotoluene, diethyl ether, tetrahydrofuran, diisopropyl ether, N,N-dimethylformamide, N,N-dimethylacetamide, dimethyl sulfoxide, trimethylphosphoric acid and N,N-dimethylimidazolidinone. More preferable are toluene, xylene, chloroform, methylene chloride and tetrahydrofuran.

The atmosphere for exposure of the mixture of the cyclic poly(phenylene ether ether ketone) and the linear poly(phenylene ether ether ketone) to the solvent is not specifically limited but is preferably a non-oxidizing atmosphere, is more preferably an inert gas atmosphere such as nitrogen, helium or argon and is especially preferably a nitrogen atmosphere, because of the economic efficiency and easy handling.

The temperature for exposure of the mixture of the cyclic poly(phenylene ether ether ketone) and the linear poly(phenylene ether ether ketone) to the solvent is not specifically limited. In general, the higher temperature is more likely to accelerate dissolution of the cyclic poly(phenylene ether ether ketone) in the solvent. It is preferable to expose the mixture of the cyclic poly(phenylene ether ether ketone) and the linear poly(phenylene ether ether ketone) to the solvent at ordinary pressure as described above, so that the upper limit temperature is preferably a reflux temperature of the solvent used under the atmospheric pressure. In an application using the preferable solvent described above, a specific temperature range is, for example, 20 to 150°C.

The time for exposure of the mixture of the cyclic poly(phenylene ether ether ketone) and the linear poly(phenylene ether ether ketone) to the solvent differs depending on, for example, the solvent species used and the temperature and is thus not unequivocally determined. The time may be, for example, 1 minute to 50 hours. The time in this range is likely to allow the cyclic poly(phenylene ether ether ketone) to be sufficiently dissolved in the solvent.

The method employed to expose the above mixture to the solvent is not specifically limited but may be any known general technique, for example, a method of mixing the mixture of the cyclic poly(phenylene ether ether ketone) and the linear poly(phenylene ether ether ketone) with the solvent and recovering a solution moiety after stirring as appropriate, a method of spraying the solvent onto the above mixture placed on any of various filters to simultaneously dissolve the cyclic poly(phenylene ether ether ketone) in the solvent, or a method based on the principle of Soxhlet extraction.

The amount of the solvent used for exposure of the mixture of the cyclic poly(phenylene ether ether ketone) and the linear poly(phenylene ether ether ketone) to the solvent is not specifically limited but may be, for example, in a range of 0.5 to 100 as a liquor ratio to the weight of the mixture. The liquor ratio in this range is likely to uniformly mix the above mixture with the solvent and sufficiently dissolve the cyclic poly(phenylene ether ether ketone) in the solvent. In general, the higher liquor ratio is more advantageous for dissolution of the cyclic poly(phenylene ether ether ketone) in the solvent. The excessively high liquor ratio, however, does not provide any further enhanced effect but may, on the contrary, lead to an economic disadvantage by increasing the amount of the solvent used. In the case of repeatedly exposing the mixture to the solvent, even the low liquor ratio is likely to have the sufficient effect. The Soxhlet extraction has, in principle, the similar effect and is thus likely to have the sufficient effect at the low liquor ratio.

When a solution in which the cyclic poly(phenylene ether ether ketone) is dissolved is obtained in the form of solid-liquid slurry including the solid linear poly(phenylene ether ether ketone) after exposure of the mixture of the cyclic poly(phenylene ether ether ketone) and the linear poly(phenylene ether ether ketone) to the solvent, it is preferable to recover a solution moiety by a known solid-liquid separation technique. The solid-liquid separation technique may be, for example, separation by filtration, centrifugal separation or decantation. The cyclic poly(phenylene ether ether ketone) can be recovered by removing the solvent from the solution separated by such a technique. When the cyclic poly(phenylene ether ether ketone) still remains in a solid component, repeating the exposure to the solvent and the recovery of the solution moiety enables the cyclic poly(phenylene ether ether ketone) to be obtained at the higher yield.

The cyclic poly(phenylene ether ether ketone) may be obtained as a solid component by removing the solvent from the cyclic poly(phenylene ether ether ketone)-including solution obtained as described above. The method employed for removal of the solvent may be, for example, a heating method at ordinary pressure or a solvent removal method using a membrane. In order to obtain the cyclic poly(phenylene ether ether ketone) at the higher yield and the higher efficiency, however, a preferable method removes the solvent by heating at ordinary pressure or reduced pressure. The cyclic poly(phenylene ether ether ketone)-including solution obtained as described above may include a solid substance at some temperature. This solid substance is also part of the cyclic poly(phenylene ether ether ketone) and is thus preferably recovered with a component soluble in the solvent in the course of removal of the solvent. This enables the cyclic poly(phenylene ether ether ketone) to be obtained at the high yield. Removal of the solvent removes at least 50% by weight or more of the solvent, preferably 70% by weight or more of the solvent, more preferably 90% by weight or more of the solvent and furthermore preferably 95% by weight or more of the solvent. The temperature for removal of the solvent by heating depends on the solvent species used and is thus not unequivocally determined. The temperature is, however, generally not lower than 20°C and is preferably not lower than 40°C as the lower limit. The temperature is also generally not higher than 150°C and is preferably not higher than 120°C as the upper limit. The pressure for removal of the solvent is preferably ordinary pressure or reduced pressure, which allows for removal of the solvent at lower

temperature.

The cyclic poly(phenylene ether ether ketone) composition obtained by the method according to the embodiment of the invention is the high purity composition generally including 60% by weight or more of the cyclic poly(phenylene ether ether ketone) as described in Chapter (1). This high purity composition has different properties from those of the conventionally obtained linear poly(phenylene ether ether ketone) and is industrially highly valuable.

(9) Production Method of Poly(Phenylene Ether Ether Ketone)

The cyclic poly(phenylene ether ether ketone) composition obtained by the method according to the embodiment of the invention may be used as a poly(phenylene ether ether ketone) prepolymer and may be converted to a poly(phenylene ether ether ketone) by thermal ring-opening polymerization. The poly(phenylene ether ether ketone) herein is a linear compound that has para-phenylene ketone and para-phenylene ether as repeating structural units and is expressed by the general formula (II) given above. The reduced viscosity ($\eta$) of the poly(phenylene ether ether ketone) obtained by thermal ring-opening polymerization of the cyclic poly(phenylene ether ether ketone) composition according to the embodiment of the invention is not specifically limited, but is preferably not lower than 0.1 dL/g, is more preferably not lower than 0.2 dL/g and is furthermore preferably not lower than 0.3 dL/g as the lower limit. The reduced viscosity ($\eta$) is also preferably not higher than 2.5 dL/g, is more preferably not higher than 2.0 dL/g and is furthermore preferably not higher than 1.8 dL/g as the upper limit.

The heating temperature in the process of converting the cyclic poly(phenylene ether ether ketone) composition into the poly(phenylene ether ether ketone) by thermal ring-opening polymerization is preferably not lower than the melting temperature of the cyclic poly(phenylene ether ether ketone) composition and it is not particularly restricted as long as such temperature condition is attained. The heating temperature lower than the melting point of the cyclic poly(phenylene ether ether ketone) requires a long time to obtain the poly(phenylene ether ether ketone) by thermal ring-opening polymerization. Otherwise, the thermal ring-opening polymerization does not proceed at such heating temperature, so that it is unlikely to obtain the poly(phenylene ether ether ketone).

The melting temperature of the cyclic poly(phenylene ether ether ketone) composition is varied according to the composition and the molecular weight of the cyclic poly(phenylene ether ether ketone), the weight fraction of the cyclic poly(phenylene ether ether ketone) included in the cyclic poly(phenylene ether ether ketone) composition and the environment during heating and is thus not unequivocally determined. The melting point may, however, be determined, for example, by analyzing the cyclic poly(phenylene ether ether ketone) composition by a differential scanning calorimeter. The lower limit of the heating temperature is, for example, not lower than 150°C, is preferably not lower than 180°C, is more preferably not lower than 200°C and is furthermore preferably not lower than 220°C. In this temperature range, the cyclic poly(phenylene ether ether ketone) composition is melted, so that the poly(phenylene ether ether ketone) is obtainable in a short time. The excessively high temperature for thermal ring-opening polymerization is, on the other hand, likely to cause undesirable side reactions, for example, cross-linking reactions between the cyclic poly(phenylene ether ether ketone)s, between the poly(phenylene ether ether ketone)s produced by heating and between the poly(phenylene ether ether ketone) and the cyclic poly(phenylene ether ether ketone), and degradation reactions. This may result in degrading the properties of the obtained poly(phenylene ether ether ketone). It is accordingly preferable to avoid the temperature that significantly causes such undesirable side reactions.

The upper limit of the heating temperature is, for example, not higher than 500°C, is preferably not higher than 400°C, is more preferably not higher than 360°C, is furthermore preferably not higher than 335°C and is especially preferably not higher than 300°C. The heating temperature of not higher than this temperature range is likely to suppress adverse effects by the undesirable side reactions on the properties of the obtained poly(phenylene ether ether ketone). Using the known cyclic poly(phenylene ether ether ketone) requires a long time for the thermal ring-opening polymerization in the above preferable temperature range, due to the high melting point of the cyclic poly(phenylene ether ether ketone). Otherwise, in the case of using the known cyclic poly(phenylene ether ether ketone), the thermal ring-opening polymerization does not proceed, so that it is unlikely to obtain the poly(phenylene ether ether ketone). Using the cyclic poly(phenylene ether ether ketone) composition according to the embodiment of the invention that is characterized by the melting point of not higher than 270°C, on the other hand, causes the thermal ring-opening polymerization to efficiently proceed in the above preferable temperature range, so as to obtain the poly(phenylene ether ether ketone). In the production method of the poly(phenylene ether ether ketone) according to the embodiment of the invention, thermal ring-opening polymerization may be performed at the temperature of not higher than the melting point of the obtained poly(phenylene ether ether ketone).

The reaction time differs depending on various conditions, for example, the weight fraction and the composition ratio of the cyclic poly(phenylene ether ether ketone) in the cyclic poly(phenylene ether ether ketone) composition used, the heating temperature and the thermal ring-opening polymerization method and is thus not unequivocally determined. It is, however, preferable to set the reaction time to interfere with the undesirable side reactions, such as the cross-linking reactions described above. The reaction time may be, for example, not shorter than 0.01 hours and is preferably

not shorter than 0.05 hours as the lower limit. The reaction time may also be, for example, not longer than 100 hours, is preferably not longer than 20 hours and is more preferably not longer than 10 hours as the upper limit. Setting this preferable reaction time is likely to suppress adverse effects by the progress of undesirable side reactions such as cross-linking reactions on the properties of the obtained poly(phenylene ether ether ketone).

The production method of poly(phenylene ether ether ketone) by thermal ring-opening polymerization of the cyclic poly(phenylene ether ether ketone) composition according to the embodiment of the invention may be performed in the absence of or in the presence of a catalyst. The catalyst herein is not specifically limited by may be any compound having the effect of accelerating the thermal ring-opening polymerization reaction of the cyclic poly(phenylene ether ether ketone) composition according to the embodiment of the invention. Any of known catalysts including photopolymerization initiators, radical polymerization initiators, cationic polymerization initiators, anionic polymerization initiators and transition metal catalysts may be used; among them, anionic polymerization initiators are preferable. Examples of the anionic polymerization initiator include inorganic alkali metal salts and organic alkali metal salts. Examples of the inorganic alkali metal salt include alkali metal halides such as sodium fluoride, potassium fluoride, cesium fluoride and lithium chloride. Examples of the organic alkali metal slat include alkali metal alkoxides such as sodium methoxide, potassium methoxide, sodium ethoxide, potassium ethoxide, sodium tert-butoxide and potassium tert-butoxide; alkali metal phenoxides such as sodium phenoxide, potassium phenoxide, sodium-4-phenoxyphenoxide and potassium-4-phenoxyphenoxide; and alkali metal acetates such as lithium acetate, sodium acetate and potassium acetate.

The anionic polymerization initiator is expected to have the catalytic action through nucleophilic attack to the cyclic poly(phenylene ether ether ketone) composition. Accordingly, compounds having the nucleophilic attack performances equivalent to those of these anionic polymerization initiators may also be used as the catalyst. The compound having such nucleophilic attack performance may be a polymer having an anionic polymerizable end. Any of these anionic polymerization initiators may be used alone, or two or more of these anionic polymerization initiators may be used as a mixture. The thermal ring-opening polymerization of the cyclic poly(phenylene ether ether ketone) composition in the presence of any of these preferable catalysts is likely to obtain poly(phenylene ether ether ketone) in a short time. More specifically, the heating time of the thermal ring-opening polymerization is, for example, not longer than 2 hours, is preferably not longer than 1 hour and is more preferably not longer than 0.5 hours.

The amount of the catalyst used differs depending on the molecular weight of the poly(phenylene ether ether ketone) as the objective substance and the catalyst species, but is generally not lower than 0.001 mol%, is preferably not lower than 0.005 mol% and is more preferably not lower than 0.01 mol% as the lower limit, relative to 1 mol of the repeating unit of the following formula that is the primary structural unit of the cyclic poly(phenylene ether ether ketone):

[Chem. 12]

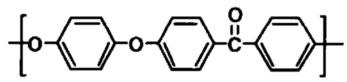

The used amount of the catalyst is generally not higher than 20 mol%, is preferably not higher than 15 mol% and is more preferably not higher than 10 mol% as the upper limit. Addition of the amount of the catalyst in this preferable range is likely to cause the thermal ring-opening polymerization of the cyclic poly(phenylene ether ether ketone) composition to proceed in a short time.

The procedure of adding the catalyst may be simple addition, but it is preferable to add the catalyst to the cyclic poly(phenylene ether ether ketone) composition and then homogeneously disperse the added catalyst. For example, a method of mechanical dispersion or a dispersion method using a solvent may be employed as the method of homogeneous dispersion. The method of mechanical dispersion may be specifically a method using a pulverizer, a stirrer, a mixer, a shaker or a mortar. The dispersion method using the solvent may be specifically a method that dissolves or disperses the cyclic poly(phenylene ether ether ketone) composition in an adequate solvent, adds the catalyst and subsequently removes the solvent. In the case of a solid catalyst, the average particle size of the polymerization catalyst is preferably not greater than 1 mm, in order to ensure more homogeneous dispersion of the catalyst.

The thermal ring-opening polymerization of the cyclic poly(phenylene ether ether ketone) composition may be performed in a solvent or under a condition substantially free from a solvent. It is, however, preferable to perform the thermal ring-opening polymerization under the condition substantially free from the solvent, since this is likely to allow for a temperature rise in a short time, a high reaction rate and production of poly(phenylene ether ether ketone) in a short time. The condition substantially free from the solvent herein indicates that the content of the solvent in the cyclic poly(phenylene ether ether ketone) composition is not higher than 20% by weight, is preferably not higher than 10% by weight and is more preferably not higher than 5% by weight.

The heating method is not specifically limited but may be any method using a device equipped with a heating mechanism, for example, a method using a mold for producing a molded product or a method using an extruder or a melt kneading machine, let alone a method using a general polymerization reaction device. A known technique such as batch system or continuous system may be employed for the heating method.

The thermal ring-opening polymerization of the cyclic poly(phenylene ether ether ketone) composition is preferably performed in a non-oxidizing atmosphere and is also preferably performed under reduced pressure condition. When the thermal ring-opening polymerization is performed under reduced pressure, a preferable procedure may control the atmosphere in the reaction system first to the non-oxidizing atmosphere and then to the reduced pressure condition. This is likely to suppress undesirable side reactions, for example, cross-linking reactions between the cyclic poly(phenylene ether ether ketone)s, between the poly(phenylene ether ether ketone)s produced by the thermal ring-opening polymerization and between the poly(phenylene ether ether ketone) and the cyclic poly(phenylene ether ether ketone), and degradation reactions. The non-oxidizing atmosphere denotes an atmosphere having an oxygen concentration of not higher than 5% by volume or preferably not higher than 2% by volume in the gas phase to which the cyclic poly(phenylene ether ether ketone) is exposed, and is more preferably an atmosphere that does not substantially contain oxygen. More specifically, the non-oxidizing atmosphere is an inert gas atmosphere such as nitrogen, helium or argon. Among them, nitrogen atmosphere is especially preferable in terms of the economic efficiency and easy handling.

The reduced pressure condition denotes that the pressure in the reaction system is lower than the atmospheric pressure. The upper limit of the reduced pressure condition is preferably not higher than 50 kPa, is more preferably not higher than 20 kPa and is furthermore preferably not higher than 10 kPa. The lower limit of the reduced pressure condition is, for example, not lower than 0.1 kPa and is more preferably not lower than 0.2 kPa. The reduced pressure condition of not lower than the preferable lower limit is unlikely to vaporize cyclic compounds of low molecular weights included in the cyclic poly(phenylene ether ether ketone) composition. The reduced pressure condition of not higher than the preferable upper limit is, on the other hand, likely to suppress undesirable side reactions such as crosslinking reaction.

Heating of the cyclic poly(phenylene ether ether ketone) described above may be performed in the coexistence of a fibrous material. The fibrous material herein means a slender threadlike material and is preferably any material of elongated structure, such as natural fibers. A composite material structure including poly(phenylene ether ether ketone) and the fibrous material can be readily produced by converting the cyclic poly(phenylene ether ether ketone) composition into the poly(phenylene ether ether ketone) in the presence of the fibrous material. This structure is reinforced by the fibrous material and is thus likely to have, for example, better mechanical properties, compared with the poly(phenylene ether ether ketone) alone.

Among various fibrous materials, it is preferable to use long-staple reinforcing fiber. This enables the poly(phenylene ether ether ketone) to be highly reinforced. In general, in the case of production of a composite material structure of a resin and a fibrous material, the high viscosity of the resin when it is melted is likely to reduce the wettability between the resin and the fibrous material, which may fail to produce a homogeneous composite material or fail to provide expected mechanical properties. The wettability herein means a contact between a fluid material such as a molten resin and a solid substrate such as a fibrous compound provided and kept in the good physical state without causing substantially no air or another gas to be trapped between the fluid material and the solid substrate. The lower viscosity of the fluid material is likely to provide the better wettability with the fibrous material. The cyclic poly(phenylene ether ether ketone) composition according to the embodiment of the invention has the significantly low viscosity in the molten state, compared with general thermoplastic resins, for example, poly(phenylene ether ether ketone), and is thus likely to have the good wettability with the fibrous material. After achieving the good wettability between the cyclic poly(phenylene ether ether ketone) composition and the fibrous material, the production method of the poly(phenylene ether ether ketone) according to the embodiment of the invention converts the cyclic poly(phenylene ether ether ketone) composition into poly(phenylene ether ether ketone). This facilitates production of a complex material structure having the good wettability of the poly(phenylene ether ether ketone) with the fibrous material.

The fibrous material is preferably the long-staple reinforcing fiber as described above. The reinforcing fiber used according to the embodiment of the invention is not specifically limited, but the reinforcing fiber favorably used may be a fiber of high heat resistance and high tensile strength generally used as high-performance reinforcing fiber. Examples of such reinforcing fiber include glass fibers, carbon fibers, graphite fibers, aramid fibers, silicon carbide fibers, alumina fibers and boron fibers. Among them, carbon fibers and graphite fibers that have high specific strength and high specific modulus and are expected to significantly contribute to weight reduction are most preferably as the reinforcing fiber. The carbon fiber and the graphite fiber used may be any types of carbon fibers and graphite fibers according to their applications, but most suitable is a high-strength, high-ductility carbon fiber having the tensile strength of 450 kgf/$mm^2$ and the tensile ductility of not lower than 1.6%. In the case of using the long-staple reinforcing fiber, the fiber length is preferably 5 cm or longer. This range of the fiber length facilitates the strength of the reinforcing fiber to be sufficiently provided in the composite material. The carbon fiber or the graphite fiber used may be mixed with another reinforcing fiber. There is no limitation in shape or arrangement of the reinforcing fiber. For example, the arrangement of the reinforcing fiber used may be a unidirectional arrangement, a random directional arrangement, a sheet-like arrangement,

a mat-like arrangement, a fabric-like arrangement or a braid-like arrangement. In applications that need high specific strength and high specific modulus, the reinforcing fiber in the unidirectional arrangement is most suitable. The easily-handled reinforcing fiber in the cloth (fabric)-like arrangement is also suitable for the embodiment of the invention.

The above conversion of the cyclic poly(phenylene ether ether ketone) composition into poly(phenylene ether ether ketone) may be performed in the presence of a filler. The filler may be, for example, non-fibrous glass, non-fibrous carbon, or an inorganic filler. Available examples of the inorganic filler include calcium carbonate, titanium oxide and alumina.

(10) Applications of Cyclic Poly(Phenylene Ether Ether Ketone) Composition

When being blended with a thermoplastic resin, the cyclic poly(phenylene ether ether ketone) composition according to the embodiment of the invention is more likely to significantly reduce the melt viscosity of the thermoplastic resin and have the effect of improving the flowability of the thermoplastic resin. This effect is attributed to little intermolecular entanglement, since the cyclic poly(phenylene ether ether ketone) does not have the end structure unlike conventional linear compounds or linear polymers.

The thermoplastic resin herein may be any of various melt-moldable resins. Examples of the thermoplastic resin include polyamide resins, polyester resins, polyacetal resins, polycarbonate resins, polyphenylene ether resins, modified polyphenylene ether resins produced by blending or graft polymerizing polyphenylene resins with other resins, polyarylate resins, polysulfone resins, polyphenylene sulfide resins, polyethersulfone resins, polyketone resins, polyether ketone resins, polyether ether ketone resins, polyimide resins, polyamide-imide resins, polyetherimide resins, thermoplastic polyurethane resins, high-density polyethylene resins, low-density polyethylene resins, linear low-density polyethylene resins, polypropylene resins, polymethylpentene resins, cyclic olefin resins, poly(1-butene) resins, poly(1-pentene) resins, polymethylpentene resins, ethylene/ $\alpha$-olefin copolymers, copolymers of (ethylene and/or propylene) and (unsaturated carboxylic acid and/or unsaturated carboxylate), polyolefins obtained by substituting at least part of the carboxyl group with a metal ion in copolymers of (ethylene and/or propylene) and (unsaturated carboxylic acid and/or unsaturated carboxylate), block copolymers of conjugated dienes and vinyl aromatic hydrocarbons, hydrides of block copolymers of conjugated dienes and vinyl aromatic hydrocarbons, polyvinyl chloride resins, polystyrene resins, acrylic resins such as polyacrylate resins and polymethacrylate resins, acrylonitrile copolymers containing acrylonitrile as the major component, acrylonitrile butadiene styrene (ABS) resins, acrylonitrile styrene (AS) resins, cellulose-based resins such as cellulose acetate, vinyl chloride/ ethylene copolymers, vinyl chloride/ vinyl acetate copolymers, ethylene/ vinyl acetate copolymers and saponified ethylene/ vinyl acetate copolymers. Any of these resins may be used alone, or two or more of these resins may be used in combination as a polymer alloy.

The cyclic poly(phenylene ether ether ketone) composition according to the embodiment of the invention may be mixed with any of these thermoplastic resins at any arbitrary ratio. The composition ratio is preferably 70 to 99.9% by weight of the thermoplastic resin and 0.1 to 30% by weight of the cyclic poly(phenylene ether ether ketone) composition, is more preferably 90 to 99.9% by weight of the thermoplastic resin and 0.1 to 10% by weight of the cyclic poly(phenylene ether ether ketone) composition and is furthermore preferably 95 to 99.5% by weight of the thermoplastic resin and 0.5 to 5% by weight of the cyclic poly(phenylene ether ether ketone) composition.

Melt kneading technique is preferably employed for the production method of a thermoplastic resin composition by mixing the cyclic poly(phenylene ether ether ketone) composition according to the embodiment of the invention with the thermoplastic resin. Any known method may be used for melt kneading. For example, the thermoplastic resin and the cyclic poly(phenylene ether ether ketone) composition may be melt kneaded to a resin composition at temperatures of not lower than their melting temperatures by using, for example, a Banbury mixer, a rubber mill, a kneader, a single screw extruder or a twin screw extruder. Especially preferable is a method using a twin screw extruder.

Any kneading technique may be employed as the kneading method, for example, 1) method of simultaneously kneading the thermoplastic resin and the cyclic poly(phenylene ether ether ketone) or 2) method of producing a resin composition of the thermoplastic resin (mater pellets) including a high concentration of the cyclic poly(phenylene ether ether ketone), adding the thermoplastic resin to this resin composition to adjust the concentration to a specified concentration and melt kneading the mixture (master pellet method). The cyclic poly(phenylene ether ether ketone) composition according to the embodiment of the invention has the low melting point of not higher than 270°C. This enables a low temperature to be set in the melt kneading process for production of the thermoplastic resin composition and is thus likely to facilitate melt kneading with the thermoplastic resin.

The thermoplastic resin composition obtained as described above may be molded by any of generally known techniques such as injection molding, injection compression molding, compression molding, extrusion molding, blow molding, press molding and spinning. The thermoplastic resin composition may be processed to and used as various molded products. The molded products include injection molded products, extrusion molded products, blow molded products, films, sheets and fibers. The films used may be various films such as unstretched films, uniaxially stretched films and biaxially stretched films. The fibers used may be various fibers such as undrawn yarns, drawn yarns and

ultradrawn yarns.

Examples

The invention is described more specifically with reference to examples.

Various physical properties were measured by high-performance liquid chromatography, differential scanning calorimetry (DSC), infrared spectroscopy (IR), nuclear magnetic resonance spectroscopy (NMR) and an Ostwald viscosimeter. The quantitative analysis of cyclic poly(phenylene ether ether ketone) was performed by high-performance liquid chromatography. The detailed conditions of analyses are given below.

(High-performance liquid chromatography)

Apparatus: LC-10Avp series manufactured by SHIMADZU CORPORATION
Column: Mightysil RP-18GP150-4.6
Detector: photodiode array detector (using UV= 270 nm)
Column temperature: 40°C
Sample concentration: 0.1% by weight THF solution

(Differential scanning calorimetry)

The melting points of cyclic poly(phenylene ether ether ketone), poly(phenylene ether ether ketone) and ring-opening polymer were measured by using a differential scanning calorimeter. The measurement conditions are given below. The temperature of an endothermic peak during a temperature rise in the first run was measured as the melting point.

Apparatus: Robot DC manufactured by Seiko Instruments Inc.
Atmosphere: nitrogen atmosphere
Temperature program:

(First run)

* holding at 50°C for 1 minute
* increasing temperature from 50°C to 380°C at temperature rise rate of 20°C/ minute
* holding at 380°C for 1 minute
* decreasing temperature from 380°C to 50°C at temperature drop rate of 20°C/ minute

(Second run)

* holding at 50°C for 1 minute
* increasing temperature from 50°C to 380°C at temperature rise rate of 20°C/ minute
* holding at 380°C for 1 minute
* decreasing temperature from 380°C to 50°C at temperature drop rate of 20°C/ minute

(Infrared spectroscopy)

Apparatus: Perkin Elmer System 2000 FT-IR
Sample preparation: KBr Method

(Nuclear magnetic resonance spectroscopy)

Apparatus: JNM-AL400 manufactured by JEOL Ltd.
Sample preparation: prepared by dissolving about 20 mg of a sample in 600 μL of methanesulfonic acid and adding 200 μL of deuterated dichloromethane.

(Viscosimetry)

Viscosimeter: Ostwald viscosimeter
Solvent: 98% by weight sulfuric acid;
Sample concentration: 0.1 g/dL (weight of sample / volume of solvent)
Measurement temperature: 25°C;
Calculation formula of reduced viscosity: $\eta = \{(t/t0) - 1\}/ C$;
t: sample solution transit time (in seconds);
t0: slovent transit time (in seconds); and
C: concentration of the solution

[Reference Example 1]

In a 1L autoclave equipped with an agitator, 10.9 g (50.0 mmol) of 4,4'-difluorobenzophenone, 5.50 g (50.0 mmol) of hydroquinone, 0.35 g (2.5 mmol) of potassium carbonate, 5.04 g (47.5 mmol) of sodium carbonate and 500 mL of N-methyl-2-pyrrolidone were mixed. The amount of N-methyl-2-pyrrolidone was 3.33 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed. The yield of the cyclic poly(phenylene ether ether ketone) mixture relative to hydroquinone was 16.0%.

By addition of 1500 g of a 1% by weight acetic acid aqueous solution, a 500 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 150 g of deionized water, maintaining the dispersion at 70°C for 30 minutes and filtering the dispersion to obtain a solid substance was repeated three times. The resulting solid substance was vacuum dried at 70°C for 8 hours, and about 13.4 g of a dried solid matter was obtained.

Subsequently, 13.0 g of the dried solid matter obtained as described above was subjected to Soxhlet extraction at bath temperature of 80°C for 5 hours using 675 g of chloroform. Removing chloroform from a resulting extract with an evaporator gave a solid substance. A dispersion was prepared by an ultrasonic bath after addition of 10 g of chloroform to the obtained solid substance and was added dropwise to 150 g of methanol. A resulting precipitate was filtered on filter paper having the average pore size of 1 μm and was vacuum dried at 70°C for 3 hours, so that a white solid matter was obtained. The white solid matter obtained was 2.4 g and the yield relative to hydroquinone used for the reaction was 16.6%.

This white solid matter was identified as a compound of phenylene ether ketone units from an absorption spectrum by infrared spectroscopy. This white solid matter was also identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8, based on the results of mass spectroscopy (apparatus: M-1200H manufactured by Hitachi, Ltd.) after component separation by high-performance liquid chromatography and molecular weight information by MALDI-TOF-MS. The weight fraction of the cyclic poly(phenylene ether ether ketone) mixture in the cyclic poly(phenylene ether ether ketone) composition was 83% by weight. The component other than the cyclic poly(phenylene ether ether ketone) in the cyclic poly(phenylene ether

ether ketone) composition was a linear poly(phenylene ether ether ketone) oligomer.

As a result of measurement of the melting point, this cyclic poly(phenylene ether ether ketone) composition had the melting point of 158°C. As a result of measurement of the reduced viscosity, the cyclic poly(phenylene ether ether ketone) composition had the reduced viscosity of lower than 0.02 dL/g.

A chloroform-insoluble solid component in recovery of the cyclic poly(phenylene ether ether ketone) composition by Soxhlet extraction described above was vacuum dried at 70°C for 8 hours, so that 10.5 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.45 dL/g.

Structural analysis of the obtained linear poly(phenylene ether ether ketone) by 1H-NMR (sample was prepared by dissolving 20 mg of the linear poly(phenylene ether ether ketone) in 600 μL of methanesulfonic acid and adding 200 μL of deuterated dichloromethane) showed that the linear poly(phenylene ether ether ketone) included 3% of "ether ketone" skeleton different from "ether ether ketone" in the main chain skeleton.

[Reference Example 2]

The following describes synthesis according to a conventional production method of poly(phenylene ether ether ketone) described as Example in JP 2007-506833A.

In a four-necked flask equipped with an agitator, a nitrogen blowing tube, a Dean-Start apparatus, a condenser tube and a thermometer, 22.5 g (103 mmol) of 4,4'-difluorobenzophenone, 11.0 g (100 mmol) of hydroquinone and 49 g of diphenylsulfone were mixed. The amount of diphenylsulfone was about 0.16 liters relative to 1.0 mol of the benzene ring component in the mixture. The mixture was heated to 140°C with nitrogen stream, so that a substantially colorless solution was obtained. At this temperature, 10.6 g (100 mmol) of anhydrous sodium carbonate and 0.28 g (2 mmol) of anhydrous potassium carbonate were added to the solution. The reaction was allowed to proceed, when the mixture was heated to 200°C, was maintained at 200°C for 1 hour, was further heated to 250°C, was maintained at 250°C for 1 hour, was further heated to 315°C and was maintained at 315°C for 3 hours. After completion of the reaction, the reaction vessel was cooled down to room temperature and a reaction mixture was obtained.

The obtained reaction mixture was pulverized and was washed with water and acetone for removal of byproduct salts and diphenylsulfone. A resulting polymer was dried at 120°C in a hot air dryer, so that about 28.0 g of a dried solid matter was obtained.

A chloroform-soluble component was removed by Soxhlet extraction of 25.0 g of the obtained dried solid matter at bath temperature of 80°C for 5 hours using 1250 g of chloroform. A chloroform-insoluble solid component thus obtained was vacuum dried at 70°C for 8 hours, so that 24.7 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, the obtained linear poly(phenylene ether ether ketone) had the reduced viscosity of 0.75 dL/g.

Structural analysis of the obtained linear poly(phenylene ether ether ketone) by 1H-NMR showed that the linear poly(phenylene ether ether ketone) included 2% of "ether ketone" skeleton different from "ether ether ketone" in the main chain skeleton.

[Example 1]

The following describes the production method (I) of cyclic poly(phenylene ether ether ketone) using the linear poly(phenylene ether ether ketone) (reduced viscosity: 0.45 dL/g) obtained by the method of Reference Example 1.

In a 100 mL autoclave equipped with an agitator, 109.1 mg (0.5 mmol) of 4,4'-difluorobenzopheone, 55.1 mg (0.5 mmol) of hydroquinone, 53.0 mg (0.5 mmol) of anhydrous sodium carbonate, 2.1 mg (0.015 mmol) of anhydrous potassium carbonate, 1.44 g (5 mmol) of the linear poly(phenylene ether ether ketone) obtained by the method described in Reference Example 1 and 50 ml of N-methyl-2-pyrrolidone were mixed. The amount of N-methyl-2-pyrrolidone was 3.03 liters relative to 1.0 mol of the benzene ring component in the mixture. A mixture of K/Na=0.03/1 (mol/mol) was used as the base.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production

of seven different cyclic poly(phenylene ether ether ketone)s having consecutive repeating numbers m= 2 to 8 was confirmed. The yield of the cyclic poly(phenylene ether ether ketone) mixture was 6.0% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 150 g of a 1% by weight acetic acid aqueous solution, a 50 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 20 g of deionized water, maintaining the dispersion at 70°C for 30 minutes and filtering the dispersion to obtain a solid substance was repeated three times. The resulting solid substance was vacuum dried at 70°C for 8 hours, and about 1.48 g of a dried solid matter was obtained.

Subsequently, 1.4 g of the dried solid matter obtained as described above was subjected to Soxhlet extraction at bath temperature of 80°C for 5 hours using 70 g of chloroform. Removing chloroform from a resulting extract with an evaporator gave a solid substance. A dispersion was prepared by an ultrasonic bath after addition of 2 g of chloroform to the obtained solid substance and was added dropwise to 30 g of methanol. A resulting precipitate was filtered on filter paper having the average pore size of 1 μm and was vacuum dried at 70°C for 3 hours, so that a white solid matter was obtained. The white solid matter obtained was 0.1 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 84% by weight.

A chloroform-insoluble solid component in recovery of the cyclic poly(phenylene ether ether ketone) composition by Soxhlet extraction described above was vacuum dried at 70°C for 8 hours, so that 1.3 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.45 dL/g.

Structural analysis of the obtained linear poly(phenylene ether ether ketone) by 1H-NMR showed that the linear poly(phenylene ether ether ketone) included 3% of "ether ketone" skeleton different from "ether ether ketone" in the main chain skeleton.

[Example 2]

The following describes the production method (I) of cyclic poly(phenylene ether ether ketone) using the linear poly(phenylene ether ether ketone) (reduced viscosity: 0.75 dL/g) obtained by the method of Reference Example 2.

In a 100 mL autoclave equipped with an agitator, 109.1 mg (0.5 mmol) of 4,4'-difluorobenzopheone, 55.1 mg (0.5 mmol) of hydroquinone, 53.0 mg (0.5 mmol) of anhydrous sodium carbonate, 2.1 mg (0.015 mmol) of anhydrous potassium carbonate, 1.44 g (5 mmol) of the linear poly(phenylene ether ether ketone) obtained by the method described in Reference Example 2 and 50 ml of N-methyl-2-pyrrolidone were mixed. The amount of N-methyl-2-pyrrolidone was 3.03 liters relative to 1.0 mol of the benzene ring component in the mixture. A mixture of K/Na=0.03/1 (mol/mol) was used as the base.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 5.8% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 150 g of a 1% by weight acetic acid aqueous solution, a 50 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of

operations of dispersing the obtained solid substance in 20 g of deionized water, maintaining the dispersion at 70°C for 30 minutes and filtering the dispersion to obtain a solid substance was repeated three times. The resulting solid substance was vacuum dried at 70°C for 8 hours, and about 1.48 g of a dried solid matter was obtained.

Subsequently, 1.3 g of the dried solid matter obtained as described above was subjected to Soxhlet extraction at bath temperature of 80°C for 5 hours by addition of 70 g of chloroform. Removing chloroform from a resulting extract with an evaporator gave a solid substance. A dispersion was prepared by an ultrasonic bath after addition of 2 g of chloroform to the obtained solid substance and was added dropwise to 30 g of methanol. A resulting precipitate was filtered on filter paper having the average pore size of 1 μm and was vacuum dried at 70°C for 3 hours, so that a white solid matter was obtained. The white solid matter obtained was 0.09 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 85% by weight.

A chloroform-insoluble solid component in recovery of the cyclic poly(phenylene ether ether ketone) composition by Soxhlet extraction described above was vacuum dried at 70°C for 8 hours, so that 1.2 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.47 dL/g.

Structural analysis of the obtained linear poly(phenylene ether ether ketone) by 1H-NMR showed that the linear poly(phenylene ether ether ketone) included 3% of "ether ketone" skeleton different from "ether ether ketone" in the main chain skeleton.

[Example 3]

The following describes the production method (I) of cyclic poly(phenylene ether ether ketone) using the linear poly(phenylene ether ether ketone) (reduced viscosity: 0.45 dL/g, containing 3% of "ether ketone" skeleton) obtained by the method of Example 1.

In a 100 mL autoclave equipped with an agitator, 87.3 mg (0.4 mmol) of 4,4'-difluorobenzopheone, 44.0 mg (0.4 mmol) of hydroquinone, 42.4 mg (0.4 mmol) of anhydrous sodium carbonate, 1.7 mg (0.012 mmol) of anhydrous potassium carbonate, 1.15 g (4 mmol) of the linear poly(phenylene ether ether ketone) obtained by the method described in Example 1 and 40 ml of N-methyl-2-pyrrolidone were mixed. The amount of N-methyl-2-pyrrolidone was 3.03 liters relative to 1.0 mol of the benzene ring component in the mixture. A mixture of K/Na=0.03/1 (mol/mol) was used as the base.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 5.4% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 120 g of a 1% by weight acetic acid aqueous solution, a 40 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 20 g of deionized water, maintaining the dispersion at 70°C for 30 minutes and filtering the dispersion to obtain a solid substance was repeated three times. The resulting solid substance was vacuum dried at 70°C for 8 hours, and about 1.18 g of a dried solid matter was obtained.

Subsequently, 1.0 g of the dried solid matter obtained as described above was subjected to Soxhlet extraction at bath temperature of 80°C for 5 hours by addition of 70 g of chloroform. Removing chloroform from a resulting extract with an evaporator gave a solid substance. A dispersion was prepared by an ultrasonic bath after addition of 2 g of chloroform to the obtained solid substance and was added dropwise to 30 g of methanol. A resulting precipitate was filtered on filter paper having the average pore size of 1 μm and was vacuum dried at 70°C for 3 hours, so that a white

solid matter was obtained. The white solid matter obtained was 0.06 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 82% by weight.

A chloroform-insoluble solid component in recovery of the cyclic poly(phenylene ether ether ketone) composition by Soxhlet extraction described above was vacuum dried at 70°C for 8 hours, so that 0.9 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.43 dL/g.

Structural analysis of the obtained linear poly(phenylene ether ether ketone) by 1H-NMR showed that the linear poly(phenylene ether ether ketone) included 3% of "ether ketone" skeleton different from "ether ether ketone" in the main chain skeleton.

Comparison with Example 1 shows that, in the case of using the base mixture of sodium carbonate and potassium carbonate as the base, the "ether ketone" skeleton in the linear poly(phenylene ether ether ketone) is not increased when the linear poly(phenylene ether ether ketone) obtained by the production method (I) of the cyclic poly(phenylene ether ether ketone) composition is used as the raw material of the production method (I).

[Comparative Example 1]

The following describes the production method (I) of cyclic poly(phenylene ether ether ketone) using potassium carbonate as the base and the linear poly(phenylene ether ether ketone) (reduced viscosity: 0.45 dL/g) obtained by the method of Reference Example 1 as the linear poly(phenylene ether ether ketone).

In a 100 mL autoclave equipped with an agitator, 109.1 mg (0.5 mmol) of 4,4'-difluorobenzopheone, 55.1 mg (0.5 mmol) of hydroquinone, 69.1 mg (0.5 mmol) of anhydrous potassium carbonate, 1.44 g (5 mmol) of the linear poly(phenylene ether ether ketone) obtained by the method described in Reference Example 1 and 50 ml of N-methyl-2-pyrrolidone were mixed. The amount of N-methyl-2-pyrrolidone was 3.03 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 8.0% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 150 g of a 1% by weight acetic acid aqueous solution, a 50 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 20 g of deionized water, maintaining the dispersion at 70°C for 30 minutes and filtering the dispersion to obtain a solid substance was repeated three times. The resulting solid substance was vacuum dried at 70°C for 8 hours, and about 1.48 g of a dried solid matter was obtained.

Subsequently, 1.4 g of the dried solid matter obtained as described above was subjected to Soxhlet extraction at bath temperature of 80°C for 5 hours by addition of 70 g of chloroform. Removing chloroform from a resulting extract with an evaporator gave a solid substance. A dispersion was prepared by an ultrasonic bath after addition of 2 g of chloroform to the obtained solid substance and was added dropwise to 30 g of methanol. A resulting precipitate was filtered on filter paper having the average pore size of 1 μm and was vacuum dried at 70°C for 3 hours, so that a white solid matter was obtained. The white solid matter obtained was 0.14 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating

numbers m= 2 to 8. The weight fraction of the cyclic poly(phenylene ether ether ketone)s in the cyclic poly(phenylene ether ether ketone) composition was 79% by weight.

A chloroform-insoluble solid component in recovery of the cyclic poly(phenylene ether ether ketone) composition by Soxhlet extraction described above was vacuum dried at 70°C for 8 hours, so that 1.2 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.44 dL/g.

Structural analysis of the obtained linear poly(phenylene ether ether ketone) by 1H-NMR showed that the linear poly(phenylene ether ether ketone) included 7% of "ether ketone" skeleton different from "ether ether ketone" in the main chain skeleton.

The results of Reference Example 1, Example 1 and Comparative Example 1 show that the "ether ketone" skeleton as the impurity skeleton in the linear poly(phenylene ether ether ketone) is increased during the reaction in the case of using potassium carbonate alone as the base, while the impurity skeleton in the linear poly(phenylene ether ether ketone) is not increased during the reaction in the case of using the base mixture of sodium carbonate and potassium carbonate as the base. This impurity skeleton "ether ketone" does not form the cyclic poly(phenylene ether ether ketone) by the reaction. Accordingly, no increase of the impurity skeleton "ether ketone" is desired during the reaction.

[Comparative Example 2]

The following describes the production method (I) of cyclic poly(phenylene ether ether ketone) using potassium carbonate as the base and the linear poly(phenylene ether ether ketone) (reduced viscosity: 0.44 dL/g, containing 7% of "ether ketone" skeleton) obtained by the method of Comparative Example 1 as the linear poly(phenylene ether ether ketone).

In a 100 mL autoclave equipped with an agitator, 87.3 mg (0.4 mmol) of 4,4'-difluorobenzopheone, 44.0 mg (0.4 mmol) of hydroquinone, 55.3 mg mg (0.4 mmol) of anhydrous potassium carbonate, 1.15 g (4.0 mmol) of the linear poly(phenylene ether ether ketone) obtained by the method described in Comparative Example 1 and 40 ml of N-methyl-2-pyrrolidone were mixed. The amount of N-methyl-2-pyrrolidone was 3.03 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction was allowed to proceed when the mixture was further heated to 250°C and was maintained at 250°C for 5 hours. After completion of the reaction, the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 3.8% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 120 g of a 1% by weight acetic acid aqueous solution, a 40 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 12 g of deionized water, maintaining the dispersion at 70°C for 30 minutes and filtering the dispersion to obtain a solid substance was repeated three times. The resulting solid substance was vacuum dried at 70°C for 8 hours, and about 1.26 g of a dried solid matter was obtained.

Subsequently, 1.2 g of the dried solid matter obtained as described above was subjected to Soxhlet extraction at bath temperature of 80°C for 5 hours by addition of 70 g of chloroform. Removing chloroform from a resulting extract with an evaporator gave a solid substance. A dispersion was prepared by an ultrasonic bath after addition of 2 g of chloroform to the obtained solid substance and was added dropwise to 30 g of methanol. A resulting precipitate was filtered on filter paper having the average pore size of 1 μm and was vacuum dried at 70°C for 3 hours, so that a white solid matter was obtained. The white solid matter obtained was 0.06 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene

ether ether ketone) composition was 73% by weight.

A chloroform-insoluble solid component in recovery of the cyclic poly(phenylene ether ether ketone) composition by Soxhlet extraction described above was vacuum dried at 70°C for 8 hours, so that 1.1 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.42 dL/g.

Structural analysis of the obtained linear poly(phenylene ether ether ketone) by 1H-NMR showed that the linear poly(phenylene ether ether ketone) included 13% of "ether ketone" skeleton different from "ether ether ketone" in the main chain skeleton.

The results of structural analysis of the linear poly(phenylene ether ether ketone)s of Reference Example 1, Comparative Example 1 and Comparative Example 2 show that the "ether ketone" skeleton as the impurity structure in the linear poly(phenylene ether ether ketone) is increased during the reaction in the case of using potassium carbonate alone as the base

[Reference Example 4]

The following describes the production method (II) of cyclic poly(phenylene ether ether ketone) using the linear poly(phenylene ether ether ketone) (reduced viscosity: 0.45 dL/g) obtained by the method of Reference Example 1.

In a 1 L autoclave equipped with an agitator and a supplementary addition device, 14.4 g (50 mmol) of the linear poly(phenylene ether ether ketone) obtained by the method described in Reference Example 1, 0.55 g (5 mmol) of hydroquinone, 0.53 g (5 mmol) of anhydrous sodium carbonate and 500 mL of N-methyl-2-pyrrolidone were mixed. The amount of N-methyl-2-pyrrolidone was 3.2 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction (A) was allowed to proceed when the mixture was further heated to 250°C and was maintained at 250°C for 3 hours.

After completion of the reaction (A), a separately prepared solution of 1.15 g (5.3 mmol) of 4,4'-difluorobenzophenone and 50 mL of N-methyl-2-pyrrolidone was pressed into the autoclave using the supplementary addition device, while the internal temperature of the autoclave was maintained at 250°C. The amount of N-methyl-2-pyrrolidone was 3.3 liters relative to 1.0 mol of the benzene ring component in the mixture after the press-in. After the press-in, the reaction (B) was allowed to proceed when the reaction vessel was maintained at 250°C for 4 hours. After completion of the reaction (B), the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 11.3% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 1500 g of a 1% by weight acetic acid aqueous solution, a 500 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 150 g of deionized water, maintaining the dispersion at 70°C for 30 minutes and filtering the dispersion to obtain a solid substance was repeated three times. The resulting solid substance was vacuum dried at 70°C for 8 hours, and about 13.6 g of a dried solid matter was obtained.

Subsequently, 13.0 g of the dried solid matter obtained as described above was subjected to Soxhlet extraction at bath temperature of 80°C for 5 hours by addition of 675 g of chloroform. Removing chloroform from a resulting extract with an evaporator gave a solid substance. A dispersion was prepared by an ultrasonic bath after addition of 10 g of chloroform to the obtained solid substance and was added dropwise to 150 g of methanol. A resulting precipitate was filtered on filter paper having the average pore size of 1 μm and was vacuum dried at 70°C for 3 hours, so that a white solid matter was obtained. The white solid matter obtained was 1.63 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 90% by weight.

A chloroform-insoluble solid component in recovery of the cyclic poly(phenylene ether ether ketone) composition by Soxhlet extraction described above was vacuum dried at 70°C for 8 hours, so that 11.0 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.41 dL/g.

Structural analysis of the obtained linear poly(phenylene ether ether ketone) by 1H-NMR showed that the linear poly(phenylene ether ether ketone) included 3% of "ether ketone" skeleton different from "ether ether ketone" in the main chain skeleton.

Comparison with Example 1 shows that the production method (II) enables the cyclic poly(phenylene ether ether ketone) composition to be produced with the higher efficiency, compared with the production method (I) of the cyclic poly(phenylene ether ether ketone) composition and the linear poly(phenylene ether ether ketone).

[Reference Example 5]

The following describes the production method (II) of cyclic poly(phenylene ether ether ketone) using the linear poly(phenylene ether ether ketone) (reduced viscosity: 0.75 dL/g) obtained by the method of Reference Example 2.

In a 1 L autoclave equipped with an agitator and a supplementary addition device, 14.4 g (50 mmol) of the linear poly(phenylene ether ether ketone) obtained by the method described in Reference Example 2, 0.55 g (5 mmol) of hydroquinone, 0.53 g (5 mmol) of anhydrous sodium carbonate and 500 mL of N-methyl-2-pyrrolidone were mixed. The amount of N-methyl-2-pyrrolidone was 3.2 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction (A) was allowed to proceed when the mixture was further heated to 250°C and was maintained at 250°C for 3 hours.

After completion of the reaction (A), a separately prepared solution of 1.15 g (5.3 mmol) of 4,4'-difluorobenzophenone and 50 mL of N-methyl-2-pyrrolidone was pressed into the autoclave using the supplementary addition device, while the internal temperature of the autoclave was maintained at 250°C. The amount of N-methyl-2-pyrrolidone was 3.3 liters relative to 1.0 mol of the benzene ring component in the mixture after the press-in. After the press-in, the reaction (B) was allowed to proceed when the reaction vessel was maintained at 250°C for 4 hours. After completion of the reaction (B), the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 11.8% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 1500 g of a 1% by weight acetic acid aqueous solution, a 500 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 μm). A series of operations of dispersing the obtained solid substance in 150 g of deionized water, maintaining the dispersion at 70°C for 30 minutes and filtering the dispersion to obtain a solid substance was repeated three times. The resulting solid substance was vacuum dried at 70°C for 8 hours, and about 13.5 g of a dried solid matter was obtained.

Subsequently, 13.0 g of the dried solid matter obtained as described above was subjected to Soxhlet extraction at bath temperature of 80°C for 5 hours by addition of 675 g of chloroform. Removing chloroform from a resulting extract with an evaporator gave a solid substance. A dispersion was prepared by an ultrasonic bath after addition of 10 g of chloroform to the obtained solid substance and was added dropwise to 150 g of methanol. A resulting precipitate was filtered on filter paper having the average pore size of 1 μm and was vacuum dried at 70°C for 3 hours, so that a white solid matter was obtained. The white solid matter obtained was 1.68 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 91% by weight.

A chloroform-insoluble solid component in recovery of the cyclic poly(phenylene ether ether ketone) composition by Soxhlet extraction described above was vacuum dried at 70°C for 8 hours, so that 11.0 g of an off-white solid matter

was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.42 dL/g.

Structural analysis of the obtained linear poly(phenylene ether ether ketone) by 1H-NMR showed that the linear poly(phenylene ether ether ketone) included 2% of "ether ketone" skeleton different from "ether ether ketone" in the main chain skeleton.

[Reference Example 6]

The following describes the production method (II) of cyclic poly(phenylene ether ether ketone) using the linear poly(phenylene ether ether ketone) (reduced viscosity: 0.41 dL/g, containing 3% of "ether ketone" skeleton) obtained by the method of Reference Example 4.

In a 1 L autoclave equipped with an agitator and a supplementary addition device, 11.52 g (40 mmol) of the linear poly(phenylene ether ether ketone) obtained by the method described in Reference Example 4, 0.44 g (4 mmol) of hydroquinone, 0.42 g (4 mmol) of anhydrous sodium carbonate and 400 mL of N-methyl-2-pyrrolidone were mixed. The amount of N-methyl-2-pyrrolidone was 3.2 liters relative to 1.0 mol of the benzene ring component in the mixture.

After the reaction vessel was sealed under nitrogen gas at room temperature and ordinary pressure, the mixture was heated with stirring at 400 rpm from room temperature to 200°C and was maintained at 200°C for 5 minutes. The reaction (A) was allowed to proceed when the mixture was further heated to 250°C and was maintained at 250°C for 3 hours.

After completion of the reaction (A), a separately prepared solution of 0.92 g (4.2 mmol) of 4,4'-difluorobenzophenone and 40 mL of N-methyl-2-pyrrolidone was pressed into the autoclave using the supplementary addition device, while the internal temperature of the autoclave was maintained at 250°C. The amount of N-methyl-2-pyrrolidone was 3.3 liters relative to 1.0 mol of the benzene ring component in the mixture after the press-in. After the press-in, the reaction (B) was allowed to proceed when the reaction vessel was maintained at 250°C for 4 hours. After completion of the reaction (B), the reaction vessel was cooled down to room temperature and a reaction mixture was obtained.

About 0.2 g of the reaction mixture was weighed and was diluted with about 4.5 g of THF. A sample for analysis of the reaction mixture was prepared by separation and removal of a THF-insoluble component by filtration and was subjected to gas chromatography and high-performance liquid chromatography. As a result of the analysis, production of seven different cyclic poly(phenylene ether ether ketone)s having consecutive repeating numbers m= 2 to 8 was confirmed in the reaction mixture. The yield of the cyclic poly(phenylene ether ether ketone) mixture was 10.8% (the yield of the cyclic poly(phenylene ether ether ketone) denotes a calculated ratio of the amount of the benzene ring component included in the produced cyclic poly(phenylene ether ether ketone) mixture to the total amount of the benzene ring component included in the poly(phenylene ether ether ketone), hydroquinone and 4,4'-difluorobenzophenone used for the reaction).

By addition of 1200 g of a 1% by weight acetic acid aqueous solution, a 400 g aliquot of the obtained reaction mixture was slurried with stirring. The slurry was then heated to 70°C and was continuously stirred for 30 minutes. A solid substance was obtained by filtering the slurry through a glass filter (average pore size of 10 to 16 $\mu$m). A series of operations of dispersing the obtained solid substance in 150 g of deionized water, maintaining the dispersion at 70°C for 30 minutes and filtering the dispersion to obtain a solid substance was repeated three times. The resulting solid substance was vacuum dried at 70°C for 8 hours, and about 10.8 g of a dried solid matter was obtained.

Subsequently, 10.0 g of the dried solid matter obtained as described above was subjected to Soxhlet extraction at bath temperature of 80°C for 5 hours by addition of 500 g of chloroform. Removing chloroform from a resulting extract with an evaporator gave a solid substance. A dispersion was prepared by an ultrasonic bath after addition of 10 g of chloroform to the obtained solid substance and was added dropwise to 150 g of methanol. A resulting precipitate was filtered on filter paper having the average pore size of 1 $\mu$m and was vacuum dried at 70°C for 3 hours, so that a white solid matter was obtained. The white solid matter obtained was 1.23 g.

As a result of analysis by the method described in Reference Example 1, this white solid matter was identified as a cyclic poly(phenylene ether ether ketone) composition including as its primary component a cyclic poly(phenylene ether ether ketone) mixture of seven different cyclic poly(phenylene ether ether ketone)s having consecutive repeating numbers m= 2 to 8. The weight fraction of the cyclic poly(phenylene ether ether ketone)s in the cyclic poly(phenylene ether ether ketone) composition was 88% by weight.

A chloroform-insoluble solid component in recovery of the cyclic poly(phenylene ether ether ketone) composition by Soxhlet extraction described above was vacuum dried at 70°C for 8 hours, so that 8.7 g of an off-white solid matter was obtained. As a result of analysis, the obtained solid matter was identified as linear poly(phenylene ether ether ketone) from an absorption spectrum by infrared spectroscopy. As a result of measurement of the reduced viscosity, this linear poly(phenylene ether ether ketone) had the reduced viscosity of 0.43 dL/g.

Structural analysis of the obtained linear poly(phenylene ether ether ketone) by 1H-NMR showed that the linear

poly(phenylene ether ether ketone) included 3% of "ether ketone" skeleton different from "ether ether ketone" in the main chain skeleton.

Comparison with Reference Example 4 shows that, in the case of using sodium carbonate as the base, the "ether ketone" skeleton in the linear poly(phenylene ether ether ketone) is not increased when the linear poly(phenylene ether ether ketone) obtained by the production method (II) of the cyclic poly(phenylene ether ether ketone) composition is used as the raw material of the production method (II).

[Reference Example 7]

The following describes thermal ring-opening polymerization of the cyclic poly(phenylene ether ether ketone) composition obtained in Reference Example 4.

A glass vial containing 100 mg of powder obtained by mixing the cyclic poly(phenylene ether ether ketone) composition obtained in Reference Example 4 with cesium fluoride of 5 mol% relative to the repeating unit of the formula -(O-Ph-O-Ph-CO-Ph)- as the primary structural unit of the cyclic poly(phenylene ether ether ketone) was substituted with nitrogen. The vial was placed in an electric oven at the temperature regulated to 350°C and was heated for 60 minutes. The vial was then taken out of the oven and was cooled down to room temperature, so that a black solid matter was obtained.

As a result of analysis by differential scanning calorimetry, the black solid matter had the thermal properties of the melting point of 335°C and the crystallization temperature of 240°C. As a result of measurement of the reduced viscosity, the black solid matter had $\eta$ of 0.6 dL/g.

[Reference Example 8]

A glass vial containing 100 mg of powder obtained by mixing the cyclic poly(phenylene ether ether ketone) composition obtained in Reference Example 4 with cesium fluoride of 5 mol% relative to the repeating unit of the formula -(O-Ph-O-Ph-CO-Ph)- as the primary structural unit of the cyclic poly(phenylene ether ether ketone) was substituted with nitrogen. The vial was placed in an electric oven at the temperature regulated to 320°C and was heated for 60 minutes. The vial was then taken out of the oven and was cooled down to room temperature, so that a black solid matter was obtained.

As a result of analysis by differential scanning calorimetry, the black solid matter had the thermal properties of the melting point of 347°C and the crystallization temperature of 246°C. As a result of measurement of the reduced viscosity, the black solid matter had $\eta$ of 0.6 dL/g.

## Claims

1. A production method of a cyclic poly(phenylene ether ether ketone) composition and a linear poly(phenylene ether ether ketone) by a reaction by heating at least a linear poly(phenylene ether ether ketone), a dihalogenated aromatic ketone compound, a dihydroxy aromatic compound and a base in an organic polar solvent,
the production method using

   (i) the organic polar solvent of not less than 1.20 liters and not more than 100 liters relative to 1.0 mol of a benzene ring component in a reaction mixture, and
   (ii) as the base, a base mixture of at least one species selected between sodium carbonate and sodium bicarbonate and at least one species selected among carbonates and bicarbonates of alkali metals having higher atomic numbers than sodium.

2. The production method of the cyclic poly(phenylene ether ether ketone) composition and the linear poly(phenylene ether ether ketone) according to claim 1,
in production of the cyclic poly(phenylene ether ether ketone) composition and the linear poly(phenylene ether ether ketone) by the reaction by heating at least the linear poly(phenylene ether ether ketone), the dihalogenated aromatic ketone compound, the dihydroxy aromatic compound and the base in the organic polar solvent,
the production method comprising:

   performing a reaction (A) by heating a mixture that includes at least the linear poly(phenylene ether ether ketone), the dihydroxy aromatic compound, the base and the organic polar solvent; and
   performing a reaction (B) by adding the dihalogenated aromatic ketone compound to a reaction mixture obtained by the reaction (A) such as to be 1.0 to 1.5 mol relative to 1 mol of the dihydroxy aromatic compound used in

the reaction (A).

3. The production method of the cyclic poly(phenylene ether ether ketone) composition and the linear poly(phenylene ether ether ketone) according to either claim 1 or claim 2, wherein the cyclic poly(phenylene ether ether ketone) composition obtained by the reaction is a composition including 60% by weight or more of cyclic poly(phenylene ether ether ketone) that is expressed by a general formula (I) and is a mixture of cyclic poly(phenylene ether ether ketone)s having different repeating numbers, and the cyclic poly(phenylene ether ether ketone) composition has a melting point of not higher than 270°C,

[Chem. 1]

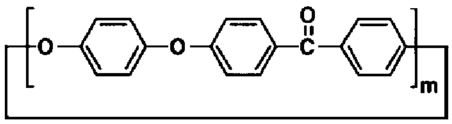

(I)

(where m in the formula (I) is an integral number of 2 to 40).

4. The production method of the cyclic poly(phenylene ether ether ketone) composition and the linear poly(phenylene ether ether ketone) according to claim 3, wherein m is at least three or more different integral numbers.

5. The production method of the cyclic poly(phenylene ether ether ketone) composition and the linear poly(phenylene ether ether ketone) according to either claim 3 or claim 4, wherein m is at least three or more consecutive integral numbers.

6. The production method of the cyclic poly(phenylene ether ether ketone) composition and the linear poly(phenylene ether ether ketone) according to any one of claims 1 to 5, wherein the linear poly(phenylene ether ether ketone) used for the reaction is a linear poly(phenylene ether ether ketone) obtained by exposing the dihalogenated aromatic ketone compound, the dihydroxy aromatic compound and the base to the organic polar solvent.

7. The production method of the cyclic poly(phenylene ether ether ketone) composition and the linear poly(phenylene ether ether ketone) according to any one of claims 1 to 5, wherein the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by a reaction by heating a mixture including at least the dihalogenated aromatic ketone compound, the dihydroxy aromatic compound, the base and the organic polar solvent and having an amount of the organic polar solvent of not less than 1.20 liters and not more than 100 liters relative to 1.0 mol of the benzene ring component in the mixture.

8. The production method of the cyclic poly(phenylene ether ether ketone) composition and the linear poly(phenylene ether ether ketone) according to any one of claims 1 to 5, wherein the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by a reaction by heating a mixture including at least the linear poly(phenylene ether ether ketone), the dihalogenated aromatic ketone compound, the dihydroxy aromatic compound, the base and the organic polar solvent and having an amount of the organic polar solvent of not less than 1.20 liters and not more than 100 liters relative to 1.0 mol of the benzene ring component in the mixture.

9. The production method of the cyclic poly(phenylene ether ether ketone) composition and the linear poly(phenylene ether ether ketone) according to any one of claims 1 to 5, with regard to the reaction by heating at least the linear poly(phenylene ether ether ketone), the dihalogenated aromatic ketone compound, the dihydroxy aromatic compound and the base in the organic polar solvent, the production method comprising:

performing a reaction (A) by heating a mixture that includes at least the linear poly(phenylene ether ether ketone), the dihydroxy aromatic compound, the base and the organic polar solvent; and
performing a reaction (B) by adding the dihalogenated aromatic ketone compound to a reaction mixture obtained by the reaction (A) such as to be 1.0 to 1.5 mol relative to 1 mol of the dihydroxy aromatic compound used in the reaction (A), wherein
the linear poly(phenylene ether ether ketone) used for the reaction is a linear poly(phenylene ether ether ketone) obtained by separating the cyclic poly(phenylene ether ether ketone) composition from a poly(phenylene ether ether ketone) mixture that includes cyclic poly(phenylene ether ether ketone) and the linear poly(phenylene ether ether ketone) and is obtained by the reaction (B).

**10.** A production method of a cyclic poly(phenylene ether ether ketone) composition and a linear poly(phenylene ether ether ketone), comprising the steps of:

(1) performing the production method according to any one of claims 1 to 5;
(2) separating a cyclic poly(phenylene ether ether ketone) composition from the cyclic poly(phenylene ether ether ketone) composition and a linear poly(phenylene ether ether ketone) obtained in the step (1);
(3) performing the step (1) using the linear poly(phenylene ether ether ketone) after separation of the cyclic poly(phenylene ether ether ketone) composition in the step (2);
(4) separating a cyclic poly(phenylene ether ether ketone) composition from the cyclic poly(phenylene ether ether ketone) composition and a linear poly(phenylene ether ether ketone) obtained in the step (3); and
(5) repeating the step (3) and the step (4).

**11.** A production method of poly(phenylene ether ether ketone), the production method comprising:
producing the poly(phenylene ether ether ketone) by thermal ring-opening polymerization of the cyclic poly(phenylene ether ether ketone) composition obtained by the production method according to any one of claims 1 to 10.

## Patentansprüche

**1.** Herstellungsverfahren für eine Mischung zyklischer Poly(phenylenether-ether-ketone) und ein lineares Poly(phenylenether-etherketon) durch Umsetzung mittels Erhitzen zumindest eines linearen Poly(phenylenether-etherketons), einer dihalogenierten aromatischen Ketonverbindung, einer aromatischen Dihydroxyverbindung und einer Base in einem polaren organischen Lösungsmittel,
wobei das Herstellungsverfahren die Verwendung von Folgendem umfasst:

(i) des polaren organischen Lösungsmittels in einer Menge von nicht weniger als 1,20 l und nicht mehr als 100 l pro 1,0 mol Benzolringkomponenten im Reaktionsgemisch und
(ii) eines Basengemischs aus zumindest einer aus Natriumcarbonat und Natriumbicarbonat ausgewählten Spezies und zumindest einer aus Carbonaten und Bicarbonaten von Alkalimetallen mit einer höheren Ordnungszahl als Natrium ausgewählten Spezies als Base.

**2.** Herstellungsverfahren für eine Mischung zyklischer Poly(phenylenether-ether-ketone) und ein lineares Poly(phenylenether-etherketon) nach Anspruch 1,
zur Herstellung der Mischung zyklischer Poly(phenylenether-etherketone) und des linearen Poly(phenylenether-etherketons) durch Umsetzung mittels Erhitzen des linearen Poly(phenylenether-etherketons), der dihalogenierten aromatischen Ketonverbindung, der aromatischen Dihydroxyverbindung und der Base in einem polaren organischen Lösungsmittel,
wobei das Herstellungsverfahren Folgendes umfasst:

Durchführen einer Reaktion (A) durch Erhitzen eines Gemischs, das zumindest das lineare Poly(phenylenether-etherketon), die aromatische Dihydroxyverbindung, die Base und das polare organische Lösungsmittel umfasst; und
Durchführen einer Reaktion (B) durch Zusetzen der dihalogenierten aromatischen Ketonverbindung zu dem durch Reaktion (A) erhaltenen Reaktionsgemisch in einer Menge von 1,0 bis 1,5 mol pro 1 mol der in Reaktion (A) eingesetzten aromatischen Dihydroxyverbindung.

**3.** Herstellungsverfahren für eine Mischung zyklischer Poly(phenylenether-ether-ketone) und ein lineares Poly(phenylenether-etherketon) nach Anspruch 1 oder 2,

wobei die durch die Reaktion erhaltene Mischung zyklischer Poly(phenylen-ether-etherketone) eine Mischung ist, die 60 Gew.-% oder mehr an durch die allgemeine Formel (I) dargestelltem zyklischem Poly(phenylenether-etherketon) umfasst und ein Gemisch zyklischer Poly(phenylenether-etherketonen) mit unterschiedlichen Polymerisationsgraden ist, und
die Mischung zyklischer Poly(phenylenether-etherketone) einen Schmelzpunkt von nicht mehr als 270 °C aufweist

[Chem. 1]

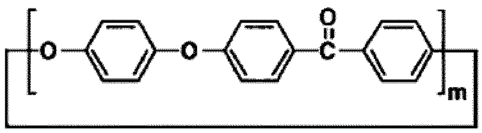

(I)

(wobei m in Formel (I) eine ganze Zahl von 2 bis 40 ist).

4. Herstellungsverfahren für eine Mischung zyklischer Poly(phenylenether-ether-ketone) und ein lineares Poly(phenylenether-etherketon) nach Anspruch 3,
wobei m für zumindest drei oder mehr unterschiedliche ganze Zahlen steht.

5. Herstellungsverfahren für eine Mischung zyklischer Poly(phenylenether-ether-ketone) und ein lineares Poly(phenylenether-etherketon) nach Anspruch 3 oder 4,
wobei m für zumindest drei oder mehr aufeinanderfolgende ganze Zahlen steht.

6. Herstellungsverfahren für eine Mischung zyklischer Poly(phenylenether-ether-ketone) und ein lineares Poly(phenylenether-etherketon) nach einem der Ansprüche 1 bis 5,
wobei das in der Reaktion eingesetzte lineare Poly(phenylenether-etherketon) ein lineares Poly(phenylenether-etherketon) ist, das durch Versetzen der dihalogenierten aromatischen Ketonverbindung, der aromatischen Dihydroxyverbindung und der Base mit dem polaren organischen Lösungsmittel erhalten wurde.

7. Herstellungsverfahren für eine Mischung zyklischer Poly(phenylenether-ether-ketone) und ein lineares Poly(phenylenether-etherketon) nach einem der Ansprüche 1 bis 5,
wobei das in der Reaktion eingesetzte lineare Poly(phenylenether-etherketon) ein lineares Poly(phenylenether-etherketon) ist, das durch Abtrennen der Mischung zyklischer Poly(phenylenether-etherketone) von einem Gemisch aus Poly(phenylen-ether-etherketonen) erhalten wurde, das zyklisches Poly(phenylenether-etherketon) und das lineare Poly(phenylenether-etherketon) enthält und durch Erhitzen eines Gemischs erhalten wurde, das zumindest die dihalogenierte aromatische Ketonverbindung, die aromatische Dihydroxyverbindung, die Base und das polare organische Lösungsmittel enthält und eine Menge des polaren organischen Lösungsmittels von nicht weniger als 1,20 l und nicht mehr als 100 l pro 1,0 mol der Benzolringkomponente im Gemisch aufweist.

8. Herstellungsverfahren für eine Mischung zyklischer Poly(phenylenether-ether-ketone) und ein lineares Poly(phenylenether-etherketon) nach einem der Ansprüche 1 bis 5,
wobei das in der Reaktion eingesetzte lineare Poly(phenylenether-etherketon) ein lineares Poly(phenylenether-etherketon) ist, das durch Abtrennen der Mischung zyklischer Poly(phenylenether-etherketone) von einem Gemisch aus Poly(phenylen-ether-etherketonen) erhalten wurde, das zyklisches Poly(phenylenether-etherketon) und das lineare Poly(phenylenether-etherketon) enthält und durch Erhitzen eines Gemischs erhalten wurde, das zumindest das lineare Poly(phenylenether-etherketon), die dihalogenierte aromatische Ketonverbindung, die aromatische Dihydroxyverbindung, die Base und das organische polare Lösungsmittel enthält und eine Menge des polaren organischen Lösungsmittels von nicht weniger als 1,20 l und nicht mehr als 100 l pro 1,0 mol der Benzolringkomponente im Gemisch aufweist.

9. Herstellungsverfahren für eine Mischung zyklischer Poly(phenylenether-ether-ketone) und ein lineares Poly(phenylenether-etherketon) nach einem der Ansprüche 1 bis 5,
wobei in Bezug auf die Reaktion mittels Erhitzen zumindest des linearen Poly(phenylenether-etherketons), der dihalogenierten aromatischen Ketonverbindung, der aromatischen Dihydroxyverbindung und der Base im polaren organischen Lösungsmittel
das Herstellungsverfahren Folgendes umfasst:

Durchführen einer Reaktion (A) durch Erhitzen eines Gemischs, das zumindest das lineare Poly(phenylenether-etherketon), die aromatische Dihydroxyverbindung, die Base und das organische polare Lösungsmittel umfasst; und

Durchführen einer Reaktion (B) durch Zusetzen der dihalogenierten aromatischen Ketonverbindung zu dem durch Reaktion (A) erhaltenen Reaktionsgemisch in einer Menge von 1,0 bis 1,5 mol pro 1 mol der in Reaktion (A) eingesetzten aromatischen Dihydroxyverbindung, wobei

das in der Reaktion eingesetzten lineare Poly(phenylenether-etherketon) ein lineares Poly(phenylenether-etherketon) ist, das durch Abtrennen der Mischung zyklischer Poly(phenylenether-etherketone) von einem Gemisch aus Poly(phenylenether-etherketonen) erhalten wurde, das zyklisches Poly(phenylenether-etherketon) und das lineare Poly(phenylenether-etherketon) enthält und durch Reaktion (B) erhalten wurde.

**10.** Herstellungsverfahren für eine Mischung zyklischer Poly(phenylenether-ether-ketone) und ein lineares Poly(phenylenether-etherketon), das die folgenden Schritte umfasst:

(1) Durchführen eines Herstellungsverfahrens nach einem der Ansprüche 1 bis 5;
(2) Abtrennen von zyklischen Poly(phenylenether-etherketonen) von der Mischung zyklischer Poly(phenylenether-etherketone) und einem linearen Poly(pheny-lenether-etherketon), die in Schritt (1) erhalten wurden;
(3) Durchführen von Schritt (1) unter Verwendung des linearen Poly(phenylen-ether-etherketons) nach der Abtrennung der Mischung zyklischer Poly(phenylen-ether-etherketone) in Schritt (2);
(4) Abtrennen einer Mischung zyklischer Poly(phenylenether-etherketone) von der Mischung zyklischer Poly(phenylenether-etherketone) und einem linearen Poly-(phenylenether-etherketon), die in Schritt (3) erhalten wurden; und
(5) Wiederholen von Schritt (3) und Schritt (4).

**11.** Herstellungsverfahren für Poly(phenylenether-etherketon), wobei das Herstellungsverfahren Folgendes umfasst: Herstellen des Poly(phenylenether-etherketons) durch thermische Ringöffnungspolymerisation einer Mischung zyklischer Poly(phenylenether-etherketone), die durch ein Herstellungsverfahren nach einem der Ansprüche 1 bis 10 erhalten wurde.

## Revendications

**1.** Procédé de production d'une composition de poly(phénylène-éther-éthercétone) cyclique et d'une poly(phénylène-éther-éthercétone) linéaire par une réaction de chauffage d'au moins une poly(phénylène-éther-éthercétone) linéaire, d'un composé cétone aromatique dihalogéné, d'un composé dihydroxy aromatique et d'une base dans un solvant organique polaire,
le procédé de production utilisant

(i) le solvant organique polaire à raison d'au moins 1,20 litres et d'au plus 100 litres pour 1,0 mole d'un composant cyclique benzénique dans un mélange réactionnel, et
(ii) en tant que base, un mélange basique d'au moins une espèce choisie parmi le carbonate de sodium et le bicarbonate de sodium et d'au moins une espèce choisie parmi les carbonates et bicarbonates de métaux alcalins ayant des nombres atomiques supérieurs à celui du sodium.

**2.** Procédé de production de la composition de poly(phénylène-éther-éthercétone) cyclique et de la poly(phénylène-éther-éthercétone) linéaire selon la revendication 1,
dans la production de la composition de poly(phénylène-éther-éthercétone) cyclique et de la poly(phénylène-éther-éthercétone) linéaire par la réaction de chauffage d'au moins la poly(phénylène-éther-éthercétone) linéaire, du composé cétone aromatique dihalogéné, du composé dihydroxy aromatique et de la base dans un solvant organique polaire,
le procédé de production comprenant :

la mise en oeuvre d'une réaction (A) par chauffage d'un mélange qui contient au moins la poly(phénylène-éther-éthercétone) linéaire, le composé dihydroxy aromatique, la base et le solvant organique polaire ; et

la mise en oeuvre d'une réaction (B) par addition du composé cétone aromatique dihalogéné au mélange réactionnel obtenu par la réaction (A) de façon qu'elle soit de 1,0 à 1,5 moles par mole du composé dihydroxy aromatique utilisé dans la réaction (A).

3. Procédé de production de la composition de poly(phénylène-éther-éthercétone) cyclique et de la poly(phénylène-éther-éthercétone) linéaire selon la revendication 1 ou 2,
dans lequel la composition de poly(phénylène-éther-éthercétone) cyclique obtenue par la réaction est une composition contenant 60 % en poids de poly(phénylène-éther-éthercétone) cyclique qui est représentée par la formule générale (I) et qui est un mélange de plusieurs poly(phénylène-éther-éthercétones) cycliques ayant des nombres de répétitions différents, et
la composition de poly(phénylène-éther-éthercétone) cyclique a un point de fusion ne dépassant pas 270°C,

[Formule chimique 1]

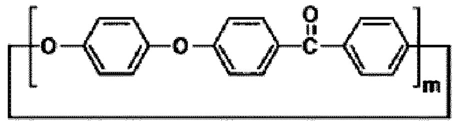

(I)

(où m dans la formule (I) est un nombre entier de 2 à 40) .

4. Procédé de production de la composition de poly(phénylène-éther-éthercétone) cyclique et de la poly(phénylène-éther-éthercétone) linéaire selon la revendication 3,
dans lequel m représente au moins trois ou plus de trois nombres entiers différents.

5. Procédé de production de la composition de poly(phénylène-éther-éthercétone) cyclique et de la poly(phénylène-éther-éthercétone) linéaire selon la revendication 3 ou la revendication 4,
dans lequel m représente au moins trois ou plus de trois nombres entiers consécutifs.

6. Procédé de production de la composition de poly(phénylène-éther-éthercétone) cyclique et de la poly(phénylène-éther-éthercétone) linéaire selon l'une quelconque des revendications 1 à 5,
dans lequel la poly(phénylène-éther-éthercétone) linéaire utilisée pour la réaction est une poly(phénylène-éther-éthercétone) linéaire obtenue par exposition du composé cétone aromatique dihalogéné, du composé dihydroxy aromatique et de la base au solvant organique polaire.

7. Procédé de production de la composition de poly(phénylène-éther-éthercétone) cyclique et de la poly(phénylène-éther-éthercétone) linéaire selon l'une quelconque des revendications 1 à 5,
dans lequel la poly(phénylène-éther-éthercétone) linéaire utilisée pour la réaction est une poly(phénylène-éther-éthercétone) linéaire obtenue par séparation de la composition de poly(phénylène-éther-éthercétone) cyclique à partir d'un mélange de poly(phénylène-éther-éthercétone) qui comprend de la poly(phénylène-éther-éthercétone) cyclique et la poly(phénylène-éther-éthercétone) linéaire et est obtenue par une réaction de chauffage d'un mélange contenant au moins le composé cétone aromatique dihalogéné, le composé dihydroxy aromatique, la base et le solvant organique polaire et ayant une quantité du solvant organique polaire d'au moins 1,20 litres et d'au plus 100 litres pour 1,0 mole du composant cyclique benzénique dans le mélange.

8. Procédé de production de la composition de poly(phénylène-éther-éthercétone) cyclique et de la poly(phénylène-éther-éthercétone) linéaire selon l'une quelconque des revendications 1 à 5,
dans lequel la poly(phénylène-éther-éthercétone) linéaire utilisée pour la réaction est une poly(phénylène-éther-éthercétone) linéaire obtenue par séparation de la composition de poly(phénylène-éther-éthercétone) cyclique à partir d'un mélange de poly(phénylène-éther-éthercétone) qui comprend de la poly(phénylène-éther-éthercétone) cyclique et la poly (phénylène-éther-éthercétone) linéaire et est obtenue par une réaction de chauffage d'un mélange contenant au moins le poly(phénylène-éther-éthercétone) linéaire, le composé cétone aromatique dihalogéné, le composé dihydroxy aromatique, la base et le solvant organique polaire et ayant une quantité du solvant organique polaire d'au moins 1,20 litres et d'au plus 100 litres pour 1,0 mole du composant cyclique benzénique dans le mélange.

9. Procédé de production de la composition de poly(phénylène-éther-éthercétone) cyclique et de la poly(phénylène-éther-éthercétone) linéaire selon l'une quelconque des revendications 1 à 5,
en ce qui concerne la réaction par chauffage d'au moins la poly(phénylène-éther-éthercétone) linéaire, le composé cétone aromatique dihalogéné, le composé dihydroxy aromatique et la base dans le solvant organique, polaire, lequel procédé de production comprend :

la mise en oeuvre d'une réaction (A) par chauffage d'un mélange qui contient au moins la poly(phénylène-éther-éthercétone) linéaire, le composé dihydroxy aromatique, la base et le solvant organique polaire ; et
la mise en oeuvre d'une réaction (B) par addition du composé cétone aromatique dihalogéné au mélange réactionnel obtenu par la réaction (A) de façon qu'elle soit de 1,0 à 1,5 moles par mole du composé dihydroxy aromatique utilisé dans la réaction (A),
dans lequel la poly(phénylène-éther-éthercétone) linéaire utilisée pour la réaction est une poly(phénylène-éther-éthercétone) linéaire obtenue par séparation de la composition de poly(phénylène-éther-éthercétone) cyclique à partir d'un mélange de poly(phénylène-éther-éthercétone) qui comprend de la poly(phénylène-éther-éthercétone) cyclique et la poly (phénylène-éther-éthercétone) linéaire et est obtenue par la réaction (B).

**10.** Procédé de production d'une composition de poly(phénylène-éther-éthercétone) cyclique et d'une poly(phénylène-éther-éthercétone) linéaire, comprenant les étapes suivantes :

(1) mise en oeuvre du procédé de production selon l'une quelconque des revendications 1 à 5 ;
(2) séparation d'une composition de poly(phénylène-éther-éthercétone) cyclique à partir de la composition de poly(phénylène-éther-éthercétone) cyclique et d'une poly(phénylène-éther-éthercétone) linéaire obtenues dans l'étape (1) ;
(3) mise en oeuvre de l'étape (1) par utilisation de la poly(phénylène-éther-éthercétone) linéaire après séparation de la composition de poly(phénylène-éther-éthercétone) cyclique dans l'étape (2) ;
(4) séparation d'une composition de poly(phénylène-éther-éthercétone) cyclique à partir de la composition de poly(phénylène-éther-éthercétone) cyclique et d'une poly(phénylène-éther-éthercétone) linéaire obtenues dans l'étape (3) ; et
(5) répétition de l'étape (3) et de l'étape (4).

**11.** Procédé de production d'une poly(phénylène-éther-éthercétone), le procédé de production comprenant :
la production de la poly(phénylène-éther-éthercétone) par polymérisation par décyclisation thermique de la composition de poly(phénylène-éther-éthercétone) cyclique obtenue par le procédé de production selon l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012279217 A
- EP 2508518 A1
- JP 2012207213 A
- JP 2012236981 A
- CN 101519399
- JP S5490296 A
- JP S5993724 A
- JP 2007506833 A

### Non-patent literature cited in the description

- *Macromolecules,* 1996, vol. 29, 5502
- *Macromol. Chem. Phys.,* 1996, vol. 197, 4069
- *Polymer Bulletin,* 1999, vol. 42, 245